# EUROPEAN PATENT APPLICATION

(11) **EP 4 756 852 A1**
(43) Date of publication of application: **10.06.2026**
(21) Application number: 24865023.6
(22) Date of filing: 18.06.2024
(51) Int. Cl.: H01G 4/30, H01G 4/35

(54) **MULTILAYER CERAMIC CAPACITOR**

(30) Priority: 14.09.2023 JP 2023149266
(71) Applicant: Murata Manufacturing Co., Ltd., Nagaokakyo-shi, Kyoto 617-8555 (JP)
(72) Inventor: NAKAHIRO Hisashi, Nagaokakyo-shi, Kyoto 617-8555 (JP)
(74) Representative: Zimmermann, Tankred Klaus
(86) International application number: PCT/JP2024/022043
(87) International publication number: WO 2025/057516

(57) **Abstract**

Provided is a multilayer ceramic capacitor that can reduce ESL. A multilayer ceramic capacitor 1 includes: end surface internal electrodes 20 that are exposed at both end surfaces C of a layered body 2; and side surface internal electrodes 50 that are exposed at both side surfaces B. The multilayer ceramic capacitor 1 is configured such that when a straight line that passes through a center part in the length direction L of the layered body 2 and a center part in the width direction W of the layered body 2 and extends parallel to the layering direction T is a reference line SL, the end surface internal electrode 20 that is closest to a first principal surface AA is a first outermost end surface internal electrode 20A, the distance along the reference line SL between the first outermost end surface internal electrode 20A and the first principal surface AA is a1, and the distance along a first end surface CA between one end part in the width direction W of the first outermost end surface internal electrode 20A and the first principal surface AA is b1, b1<a1.

## Description

### TECHNICAL FIELD

The present invention relates to a multilayer ceramic capacitor.

### BACKGROUND ART

There exists multi-terminal multilayer ceramic capacitors that each include a multilayer body in which dielectric layers having internal electrodes exposed at end surfaces of the multilayer body and dielectric layers having internal electrodes exposed at lateral surfaces of the multilayer body are alternately laminated in a plurality of layers, end surface external electrodes provided on the end surfaces, and lateral surface external electrodes provided on the lateral surfaces (for example, Patent Document 1). This makes it possible to reduce equivalent series inductance (ESL) in each of the multilayer ceramic capacitors.

### Patent Documents

Patent Document 1: Japanese Unexamined Patent Application, Publication No. 2016-127262

### DISCLOSURE OF THE INVENTION

### Problems to be Solved by the Invention

However, when the distance between the internal electrodes and the mounting surface increases, ESL increases, and thus for a further ESL reduction, it is necessary to reduce the distance between the internal electrodes and the mounting surface in order to shorten the current path.

It is an object for the present invention to provide multilayer ceramic capacitors that are each able to reduce ESL.

### Means for Solving the Problems

In order to achieve the abovementioned object, a multilayer ceramic capacitor according to an embodiment of the present invention is provided which includes: a multilayer body including a plurality of dielectric layers that are laminated, a plurality of internal electrodes each provided on a corresponding one of the plurality of dielectric layers, a first main surface and a second main surface opposed to each other in a lamination direction, a first lateral surface and a second lateral surface opposed to each other in a width direction orthogonal to the lamination direction, and a first end surface and a second end surface opposed to each other in a length direction orthogonal to the lamination direction and the width direction; end surface external electrodes provided in a pair, each on a corresponding one of the end surfaces; and lateral surface external electrodes provided in a pair on a corresponding one of the lateral surfaces. The plurality of internal electrodes include end surface internal electrodes each exposed at both the first end surface and the second end surface, and lateral surface internal electrodes each exposed at both the first lateral surface and the second lateral surface, and when a straight line extending parallel to the lamination direction and passing through a middle portion of the multilayer body in the length direction and a middle portion of the multilayer body in the width direction is defined as a reference line, an end surface internal electrode closest to the first main surface is defined as a first outermost end surface internal electrode, a distance between the first outermost end surface internal electrode and the first main surface on the reference line is defined as a1, and a distance between one end portion among end portions in the width direction of the first outermost end surface internal electrode on the first end surface and the first main surface is defined as b1, b1 < a1 is satisfied.

### Effects of the Invention

According to an embodiment of the present invention, it is possible to provide multilayer ceramic capacitors that are each able to reduce ESL.

### BRIEF DESCRIPTION OF THE DRAWINGS

FIG. 1 is a schematic perspective view of a multilayer ceramic capacitor 1 according to a first embodiment.
FIG. 2 is a cross-sectional view of the multilayer ceramic capacitor 1 according to the first embodiment taken along the II-II direction in FIG. 1.
FIG. 3 is a cross-sectional view of the multilayer ceramic capacitor 1 according to the first embodiment taken along the III-III direction in FIG. 1.
FIG. 4 is a side view of the multilayer body 2 according to the first embodiment as viewed from the first end surface CA.
FIG. 5 is a side view of the multilayer body 2 according to the first embodiment as viewed from the second end surface CB.
FIG. 6 is a side view of the multilayer body 2 according to the first embodiment as viewed from the first lateral surface BA.
FIG. 7 is a side view of the multilayer body 2 according to the first embodiment as viewed from the second lateral surface BB.
FIG. 8 is a view showing a ceramic green sheet on which electrically conductive paste for manufacturing end surface internal electrodes 20 is provided.
FIG. 9 is a view showing a ceramic green sheet on which electrically conductive paste for manufacturing lateral surface internal electrodes 50 is provided.
FIG. 10 is a view showing a state in which dielectric paste is applied on the ceramic green sheet of FIG. 8 during manufacturing of the multilayer ceramic capacitor 1 according to the first embodiment.
FIG. 11 is a view showing a state in which dielectric paste is applied on the ceramic green sheet of FIG. 9 during manufacturing of the multilayer ceramic capacitor 1 according to the first embodiment.
FIG. 12 is a conceptual view showing a lamination state in a mother block according to the first embodiment.
FIG. 13 is a schematic perspective view of a multilayer ceramic capacitor 100 according to a second embodiment.
FIG. 14 is a cross-sectional view of the multilayer ceramic capacitor 100 according to the second embodiment taken along the XIV-XIV direction in FIG. 13.
FIG. 15 is a cross-sectional view of the multilayer ceramic capacitor 100 according to the second embodiment taken along the XV-XV direction in FIG. 13.
FIG. 16 is a side view of the multilayer body 102 according to the second embodiment as viewed from the first end surface CA.
FIG. 17 is a side view of the multilayer body 102 according to the second embodiment as viewed from the second end surface CB.
FIG. 18 is a side view of the multilayer body 102 according to the second embodiment as viewed from the first lateral surface BA.
FIG. 19 is a side view of the multilayer body 102 according to the second embodiment as viewed from the second lateral surface BB.
FIG. 20 is a view showing a state in which dielectric paste is applied on the ceramic green sheet of FIG. 8 during manufacture of the multilayer ceramic capacitor 1 according to the second embodiment.
FIG. 21 is a conceptual view showing a lamination state in a mother block according to the second embodiment.

### PREFERRED MODE FOR CARRYING OUT THE INVENTION

### <First Embodiment>

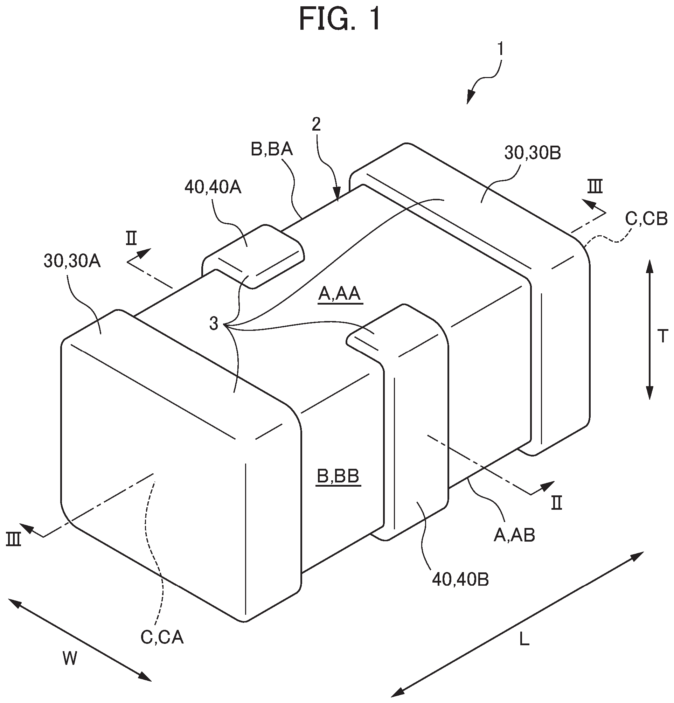

Hereinafter, a multilayer ceramic capacitor 1 according to the first embodiment of the present invention will be described. First, the configuration of the multilayer ceramic capacitor 1 will be described with reference to FIGS. 1 to 7.

### (Multilayer Ceramic Capacitor 1)

As shown in FIG. 1, the multilayer ceramic capacitor 1 includes a multilayer body 2 and a plurality of external electrodes 3. The multilayer ceramic capacitor 1 is a so-called three-terminal multilayer ceramic capacitor. The multilayer ceramic capacitor 1 is used by being mounted on a mounting substrate (not shown).

The multilayer ceramic capacitor 1 preferably has a dimension in the lamination direction T of 0.2 mm or more and 2.8 mm or less, preferably has a dimension in the length direction L of 0.6 mm or more and 3.5 mm or less, and preferably has a dimension in the width direction W of 0.3 mm or more and 2.8 mm or less.

### (Multilayer Body 2)

The multilayer body 2 has a substantially rectangular parallelepiped shape. The outer surfaces of the multilayer body 2 are all flat surfaces. It is preferred that corner portions (that is, portions where three surfaces of the multilayer body intersect) and ridge portions (that is, portions where two surfaces of the multilayer body intersect) of the multilayer body 2 are each rounded. The multilayer body 2 includes an inner layer portion 11 in which dielectric layers 14 and internal electrodes 15 are laminated, and outer layer portions 12 provided on both sides of the inner layer portion 11 in the lamination direction T.

In the present specification, as terms representing the orientation of the multilayer ceramic capacitor 1, the direction in which the dielectric layers 14 and the internal electrodes 15 are laminated in the multilayer ceramic capacitor 1 is defined as the lamination direction T. The direction intersecting the lamination direction T and in which the pair of end surface external electrodes 30 are provided is defined as the length direction L. The direction intersecting both the length direction L and the lamination direction T is defined as the width direction W. In the embodiments, the lamination direction T, the length direction L, and the width direction W are orthogonal to each other.

Among the six outer surfaces of the multilayer body 2, a pair of outer surfaces provided on both sides in the lamination direction T are defined as a first main surface AA and a second main surface AB, a pair of outer surfaces extending in the lamination direction T and provided on both sides in the width direction W are defined as a first lateral surface BA and a second lateral surface BB, and a pair of outer surfaces extending in the lamination direction T and provided on both sides in the length direction L are defined as a first end surface CA and a second end surface CB. When there is no particular need to distinguish between them, the first main surface AA and the second main surface AB are collectively referred to as "each main surface A", the first lateral surface BA and the second lateral surface BB are collectively referred to as "each lateral surface B", and the first end surface CA and the second end surface CB are sometimes collectively referred to as "each end surface C".

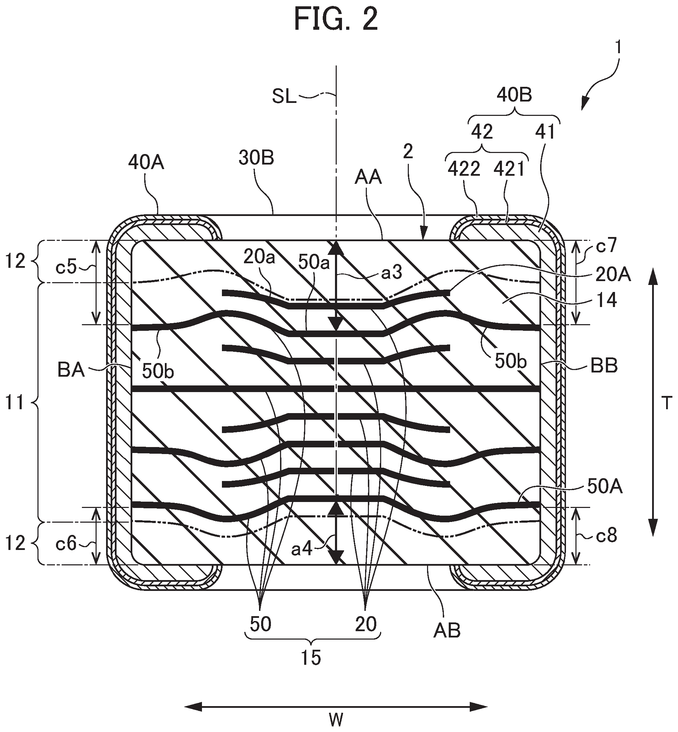

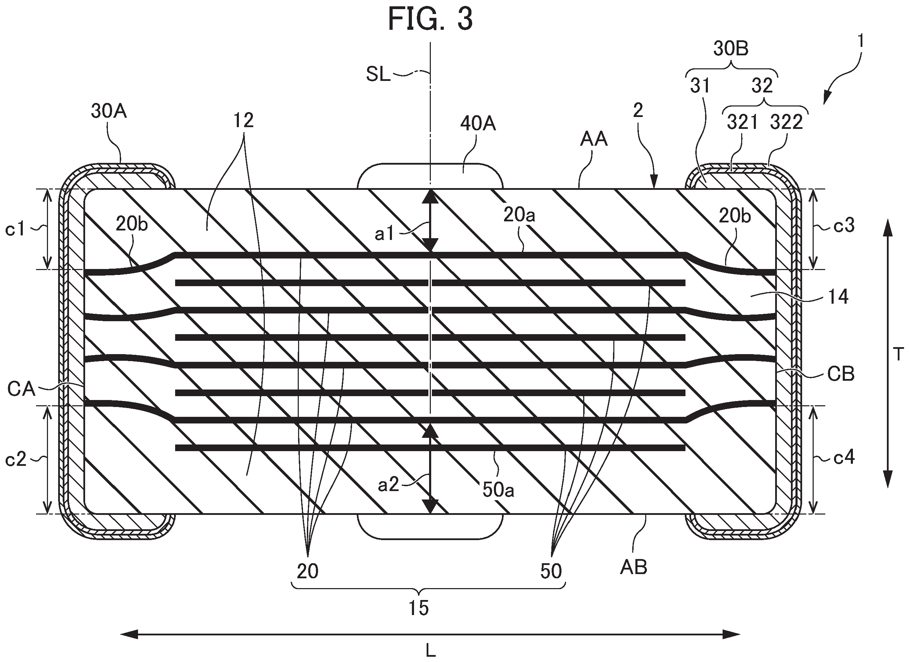

The cross section of FIG. 2 is a cross section parallel to the length direction L and the lamination direction T and passing through a middle portion of the multilayer body 2 in the width direction W. The cross section of FIG. 3 is a cross section parallel to the width direction W and the lamination direction T and passing through a middle portion of the multilayer body 2 in the length direction L.

A straight line extending parallel to the lamination direction T and passing through a middle portion of the multilayer body 2 in the length direction L and a middle portion of the multilayer body 2 in the width direction W is defined as a reference line SL.

### (Inner Layer Portion 11)

As shown in FIG. 2 and FIG. 3, the inner layer portion 11 has a substantially rectangular parallelepiped shape. The inner layer portion 11 includes dielectric layers 14 and internal electrodes 15 that are alternately laminated.

### (Dielectric Layer 14)

The dielectric layers 14 are each manufactured from a ceramic material. As the ceramic material, for example, a dielectric ceramic with BaTiO₃ as a main component is used. Also, as the ceramic material, one in which at least one among subcomponents such as a Mn compound, Fe compound, Cr compound, Co compound, Ni compound, etc., is added to these main components may be used.

### (Internal Electrode 15)

The internal electrodes 15 are each preferably made of a metal material such as Ni, Cu, Ag, Pd, Ag-Pd alloy, Au, or the like.

The plurality of internal electrodes 15 include end surface internal electrodes 20 that are exposed at both the first end surface CA and the second end surface CB, and lateral surface internal electrodes 50 that are exposed at both the first lateral surface BA and the second lateral surface BB. The end surface internal electrodes 20 and the lateral surface internal electrodes 50 are alternately provided.

### (End Surface Internal Electrode 20)

The end surface internal electrodes 20 each extend between both end surfaces C in the length direction L of the multilayer body 2 and are each spaced apart from both lateral surfaces B in the width direction W by a fixed distance. Each of the end surface internal electrodes 20 includes a first counter portion 20a opposed to the lateral surface internal electrodes 50 adjacent in the lamination direction T, and first extension portions 20b extending from the first counter portion 20a and exposed at the two end surfaces C, respectively. Specifically, the first counter portion 20a is located at the middle portion between both end surfaces C. In addition, the end surface internal electrode closest to the first main surface AA is referred to as a first outermost end surface internal electrode 20A, and the end surface internal electrode closest to the second main surface AB is referred to as a second outermost end surface internal electrode 20B.

### (Lateral Surface Internal Electrode 50)

The lateral surface internal electrodes 50 each have a dimension in the width direction W that is slightly smaller than the multilayer body 2 and is spaced apart from both end surfaces C. Each of the lateral surface internal electrodes 50 includes a second counter portion 50a that is opposed to the end surface internal electrodes 20 adjacent in the lamination direction T, and second extension portions 50b that extend from the second counter portion 50a and are exposed at the two lateral surfaces B, respectively. Specifically, the second counter portion 50a is located at the middle portion between both lateral surfaces B. In addition, the lateral surface internal electrode 50 closest to the first main surface AA is referred to as the first outermost lateral surface internal electrode 50A, and the lateral surface internal electrode 50 closest to the second main surface AB is referred to as the second outermost lateral surface internal electrode 50B.

When there is no particular need to distinguish between them, the first counter portion 20a and the second counter portion 50a are collectively referred to as "each counter portion 21, 51", and the first extension portion 20b and the second extension portion 50b are collectively referred to as "each extension portion 22, 52".

### (Outer Layer Portion 12)

Each of the outer layer portions 12 is a dielectric layer having a constant thickness. Each of the outer layer portions 12 may be manufactured from the same material as the dielectric layer 14 of the inner layer portion 11, or may be manufactured from a different material.

A dimension of each outer layer portion 12 in the lamination direction T is preferably 10 µm or more and 100 µm or less, respectively. Methods for measuring the dimension of the outer layer portion 12 in the lamination direction T include, for example, a method of observing, with a scanning electron microscope, an LT cross section near the middle in the width direction W of the multilayer body exposed by polishing. Also, due to the curvature of each of the internal electrodes 15, the dimension of each outer layer portion 12 in the lamination direction T may differ depending on the measurement position. Therefore, the dimension of the outer layer portion 12 in the lamination direction T is obtained as an average value of measured values at a plurality of locations in the length direction L. For example, this value can be obtained by setting four points spaced at equal distances in the length direction L, and obtaining an average value of measured values at each point.

### (External Electrode 3)

The plurality of external electrodes 3 include end surface external electrodes 30 each provided on one of the end surfaces C in a pair, and lateral surface external electrodes 40 each provided on one of the lateral surfaces B in a pair. The end surface external electrodes 30 include a first end surface external electrode 30A provided on the first end surface CA, and a second end surface external electrode 30B provided on the second end surface CB. The lateral surface external electrodes 40 include a first lateral surface external electrode 40A provided on the first lateral surface BA, and a second lateral surface external electrode 40B provided on the second lateral surface BB.

### (End Surface External Electrode 30)

Each of the first extension portions 20b is connected to a corresponding one of the end surface external electrodes 30. Each of the end surface external electrodes 30 covers not only a corresponding one of the end surfaces C, but also a portion of each of the main surfaces A and a portion of each of the lateral surfaces B adjacent to the end surface C. Each of the end surface external electrodes 30 includes a base electrode layer 31 and a plated layer 32 provided on the base electrode layer 31. The base electrode layer 31 contains, for example, Cu. The plated layer 32 includes a Ni (nickel) plated layer 321 provided on the base electrode layer 31 and a Sn (tin) plated layer 322 provided on the Ni plated layer 321. The base electrode layer 31 may contain Ni. An electrically conductive resin layer may be provided between the base electrode layer 31 and the plated layer 32.

### (Lateral Surface External Electrode 40)

The second extension portions 50b are connected to each of the lateral surface external electrodes 40, respectively. Each of the lateral surface external electrodes 40 covers not only one of the lateral surfaces B, but also a portion of each of the main surfaces A adjacent to the lateral surface B. Each of the lateral surface external electrodes 40 includes a base electrode layer 41 and a plated layer 42 provided on the base electrode layer 41. The base electrode layer 41 contains, for example, Cu. The plated layer 42 includes a Ni (nickel) plated layer 421 provided on the base electrode layer 41 and a Sn (tin) plated layer 422 provided on the Ni plated layer 421. The base electrode layer 41 may contain Ni.

### (Regarding Curvature of End Surface Internal Electrodes 20)

Here, at least some of the end surface internal electrodes 20 among the plurality of end surface internal electrodes 20 are curved in the lamination direction T.

First, a region adjacent to the first main surface AA of the first end surface CA will be described. As shown in FIG. 3, the middle portion in the width direction W of the first outermost end surface internal electrode 20A on the first end surface CA is spaced farther from the first main surface AA than a portion of the first outermost end surface internal electrode 20A on the reference line SL. Therefore, when the distance between the first outermost end surface internal electrode 20A and the first main surface AA on the reference line SL is defined as a1, and the distance between the middle portion in the width direction of the first outermost end surface internal electrode 20A on the first end surface CA and the first main surface AA is defined as c1, a1 < c1 is satisfied.

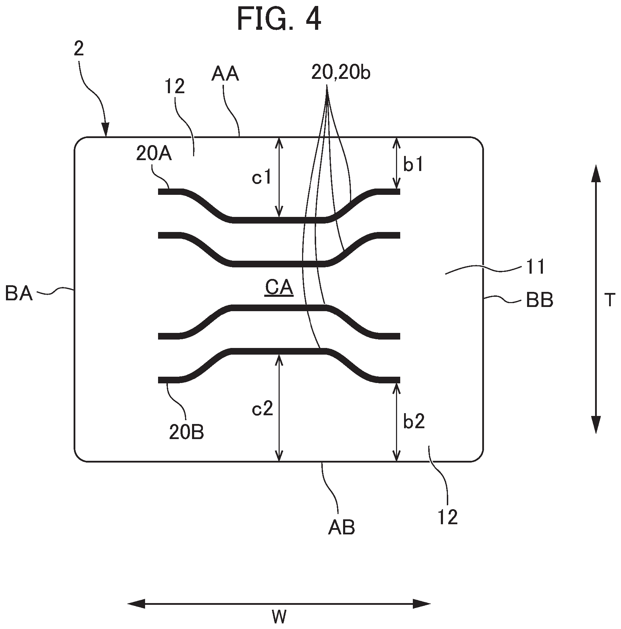

As shown in FIG. 4, on the first end surface CA, at least one end portion among the end portions in the width direction W of the first outermost end surface internal electrode 20A is closer to the first main surface AA than the middle portion in the width direction W of the first outermost end surface internal electrode 20A. Specifically, on the first end surface CA, each of the end portions in the width direction W of the first outermost lateral surface internal electrode 50A is closer to the first main surface AA than the middle portion in the width direction W of the first outermost end surface internal electrode 20A. The first main surface AA is a flat surface. Therefore, when the distance between one end portion among the end portions in the width direction W of the first outermost end surface internal electrode 20A on the first end surface CA and the first main surface AA is defined as b1, b1 ≤ c1 is satisfied, and specifically, b1 < c1 is satisfied.

At least one end portion (specifically, both end portions) among the end portions in the width direction W of the first outermost end surface internal electrode 20A on the first end surface CA is closer to the first main surface AA than the portion of the first outermost end surface internal electrode 20A on the reference line SL. Therefore, b1 < a1 is satisfied.

Next, a region adjacent to the second main surface AB of the first end surface CA will be described. A middle portion in the width direction W of the second outermost end surface internal electrode 20B on the first end surface CA is spaced farther from the second main surface AB than a portion of the second outermost end surface internal electrode 20B on the reference line SL (see FIG. 3). Therefore, when the distance between the second outermost end surface internal electrode 20B and the second main surface AB on the reference line SL is defined as a2, and the distance between the middle portion in the width direction of the second outermost end surface internal electrode 20B on the first end surface CA and the second main surface AB is defined as c2, a2 < c2 is satisfied.

On the first end surface CA, at least one end portion (specifically, both end portions) among the end portions in the width direction W of the second outermost end surface internal electrode 20B is closer to the second main surface AB than the middle portion in the width direction W of the second outermost end surface internal electrode 20B (see FIG. 3). Also, the second main surface AB is a flat surface. Therefore, when the distance between one end portion among the end portions in the width direction W of the second outermost end surface internal electrode 20B on the first end surface CA and the second main surface AB is defined as b2, b2 ≤ c2 is satisfied, and specifically, b2 < c2 is satisfied.

At least one end portion (specifically, both end portions) among the end portions in the width direction W of the second outermost end surface internal electrode 20B on the first end surface CA is closer to the second main surface AB than the portion of the second outermost end surface internal electrode 20B on the reference line SL. Therefore, b2 < a2 is satisfied.

Next, a region adjacent to the first main surface AA of the second end surface CB will be described. A middle portion in the width direction W of the first outermost end surface internal electrode 20A on the second end surface CB is spaced farther from the first main surface AA than a portion of the first outermost end surface internal electrode 20A on the reference line SL (see FIG. 3). Therefore, when the distance between the middle portion in the width direction of the first outermost end surface internal electrode 20A on the second end surface CB and the first main surface AA is defined as c3, a1 < c3 is satisfied.

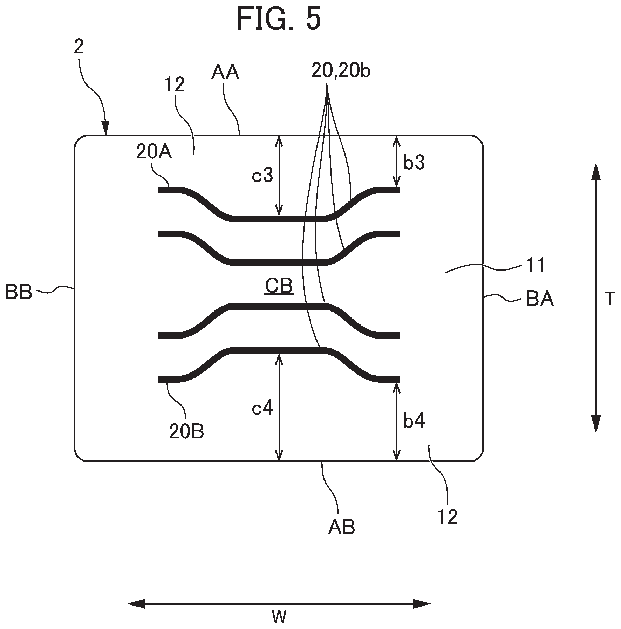

As shown in FIG. 5, on the second end surface CB, at least one end portion (specifically, both end portions) among the end portions in the width direction W of the first outermost end surface internal electrode 20A is closer to the first main surface AA than the middle portion in the width direction W of the first outermost end surface internal electrode 20A. Therefore, when the distance between one end portion among the end portions in the width direction W of the first outermost end surface internal electrode 20A on the second end surface CB and the first main surface AA is defined as b3, b3 ≤ c3 is satisfied, and specifically, b3 < c3 is satisfied.

At least one end portion (specifically, both end portions) among each end portion in the width direction W of the first outermost end surface internal electrode 20A on the second end surface CB is closer to the first main surface AA than the portion of the first outermost end surface internal electrode 20A on the reference line SL. Therefore, b3 < a1 is satisfied.

Next, a region adjacent to the second main surface AB of the second end surface CB will be described. A middle portion in the width direction W of the second outermost end surface internal electrode 20B on the second end surface CB is spaced farther from the second main surface AB than a portion of the second outermost end surface internal electrode 20B on the reference line SL (see FIG. 3). Therefore, when the distance between the middle portion in the width direction of the second outermost end surface internal electrode 20B on the second end surface CB and the first main surface AA is defined as c4, a2 < c4 is satisfied.

On the second end surface CB, at least one end portion (specifically, both end portions) among the end portions in the width direction W of the second outermost end surface internal electrode 20B is closer to the second main surface AB than the middle portion in the width direction W of the second outermost end surface internal electrode 20B (see FIG. 5). Therefore, when the distance between one end portion among the end portions in the width direction W of the second outermost end surface internal electrode 20B on the second end surface CB and the second main surface AB is defined as b4, b4 ≤ c4 is satisfied, and specifically, b4 < c4 is satisfied.

At least one end portion (specifically, both end portions) among the end portions in the width direction W of the second outermost end surface internal electrode 20B on the second end surface CB is closer to the second main surface AB than the portion of the second outermost end surface internal electrode 20B on the reference line SL. Therefore, b4 < a2 is satisfied.

In the multilayer ceramic capacitor 1, on the location adjacent to the first end surface CA and adjacent to the first main surface AA, b1 < a1 is satisfied.

When the distance through which electricity flows between the internal electrode and the mounting substrate is shortened, ESL is reduced in the multilayer ceramic capacitor. Particularly, in a high frequency region, current flowing through the internal electrode tends to flow through an edge portion of the internal electrode. Therefore, it is considered that effective reduction of ESL is possible by bringing the edge portion of the internal electrode and the mounting substrate closer to each other.

By satisfying b1 < a1, it is possible to easily shorten the distance between the mounting substrate and the edge portion of the first outermost end surface internal electrode 20A compared to a case where the internal electrode 15 is not curved. This makes it possible to reduce ESL.

Also, by satisfying b1 ≤ c1, it is possible to easily shorten the distance between the edge portion of the first outermost end surface internal electrode 20A and the mounting substrate. This makes it possible to reduce ESL. Furthermore, by satisfying b1 < c1, it is possible to more easily bring the mounting substrate and the edge portion of the first outermost end surface internal electrode 20A closer to each other. This makes it possible to reduce ESL.

Similarly, on the location adjacent to the first end surface CA and adjacent to the second main surface AB, since b2 < a2 is satisfied, it is possible to easily shorten the distance between the mounting substrate and the edge portion of the first outermost end surface internal electrode 20A. This makes it possible to reduce ESL.

Also, since b2 ≤ c2 is satisfied, it is possible to reduce ESL. Furthermore, since b2 < c2 is satisfied, it is possible to reduce ESL more suitably.

Similarly, on the location adjacent to the second end surface CB and adjacent to the first main surface AA, since b3 < a1 is satisfied, it is possible to easily shorten the distance between the mounting substrate and the edge portion of the first outermost end surface internal electrode 20A. This makes it possible to reduce ESL.

Also, since b3 ≤ a3 is satisfied, it is possible to reduce ESL. Furthermore, since b3 < a3 is satisfied, it is possible to reduce ESL more suitably.

Similarly, on the location adjacent to the second end surface CB and adjacent to the second main surface AB, since b4 < a2 is satisfied, it is possible to easily shorten the distance between the mounting substrate and the edge portion of the second outermost end surface internal electrode 20B. This makes it possible to reduce ESL.

Also, since b4 ≤ c4 is satisfied, it is possible to reduce ESL. Furthermore, since b4 < c4 is satisfied, it is possible to reduce ESL more suitably.

(Curvature of Lateral Surface Internal Electrodes 50) At least some of the lateral surface internal electrodes 50 among the plurality of lateral surface internal electrodes 50 are curved in the lamination direction T.

First, a region adjacent to the first main surface AA of the first lateral surface BA will be described. As shown in FIG. 2, the middle portion in the length direction L of the first outermost lateral surface internal electrode 50A on the first lateral surface BA and the portion of the first outermost lateral surface internal electrode 50A on the reference line SL have the same distance from the first main surface AA. Therefore, when the distance between the first outermost lateral surface internal electrode 50A and the first main surface AA on the reference line SL is defined as a3, and the distance between the middle portion in the width direction of the first outermost lateral surface internal electrode 50A on the first lateral surface BA and the first main surface AA is defined as c5, a3 = c5 is satisfied.

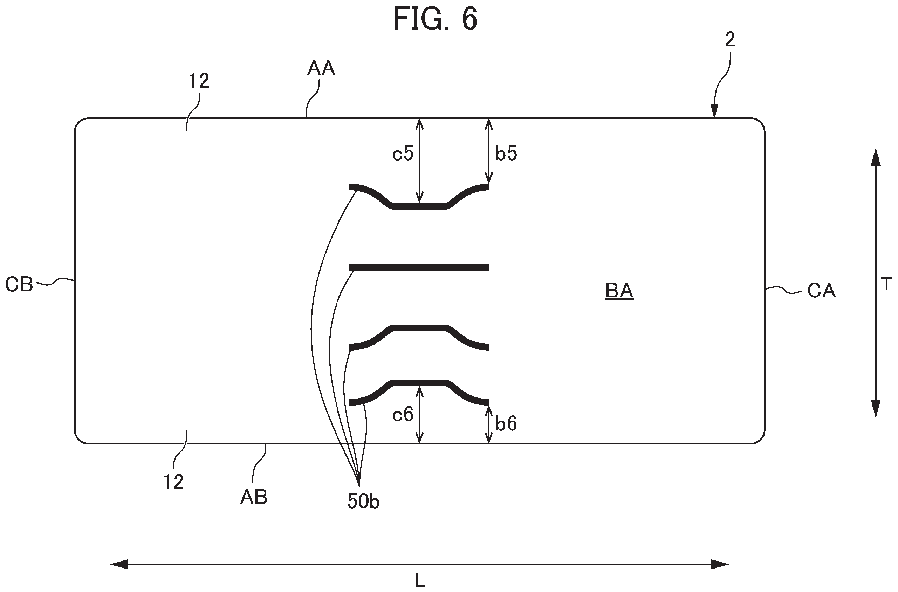

As shown in FIG. 6, on the first lateral surface BA, at least one end portion (specifically, both end portions) among the end portions in the length direction L of the first outermost lateral surface internal electrode 50A is closer to the first main surface AA than the middle portion in the length direction L of the first outermost lateral surface internal electrode 50A. Further, the first main surface AA is a flat surface. Therefore, when the distance between one end portion among the end portions in the length direction L of the first outermost lateral surface internal electrode 50A on the first lateral surface BA and the first main surface AA is defined as b5, b5 ≤ c5 is satisfied, and specifically, b5 < c5 is satisfied.

At least one end portion (specifically, both end portions) among the end portions in the length direction L of the first outermost lateral surface internal electrode 50A on the first lateral surface BA is closer to the first main surface AA than the portion of the first outermost lateral surface internal electrode 50A on the reference line SL. Therefore, b5 < a3 is satisfied.

Next, the region adjacent to the second main surface AB of the first lateral surface BA will be described. The middle portion in the length direction L of the second outermost lateral surface internal electrode 50B on the first lateral surface BA and the portion of the second outermost lateral surface internal electrode 50B on the reference line SL have the same distance from the second main surface AB (see FIG. 2). Therefore, when the distance between the second outermost lateral surface internal electrode 50B and the second main surface AB on the reference line SL is defined as a4, and the distance between the middle portion in the width direction of the second outermost lateral surface internal electrode 50B on the first lateral surface BA and the second main surface AB is defined as c6, a4 = c6 is satisfied.

On the first lateral surface BA, at least one end portion (specifically, both end portions) among the end portions in the length direction L of the second outermost lateral surface internal electrode 50B is closer to the second main surface AB than the middle portion in the length direction L of the second outermost lateral surface internal electrode 50B (see FIG. 6). Further, the second main surface AB is a flat surface. Therefore, when the distance between one end portion among the end portions in the length direction L of the second outermost lateral surface internal electrode 50B on the first lateral surface BA and the second main surface AB is defined as b6, b6 ≤ c6 is satisfied, and specifically, b6 < c6 is satisfied.

At least one end portion (specifically, both end portions) among the end portions in the length direction L of the second outermost lateral surface internal electrode 50B on the first lateral surface BA is closer to the second main surface AB than the portion of the second outermost lateral surface internal electrode 50B on the reference line SL. Therefore, b6 < a4 is satisfied.

Next, the region adjacent to the first main surface AA of the second lateral surface BB will be described. The middle portion in the length direction L of the first outermost lateral surface internal electrode 50A on the second lateral surface BB and the portion of the first outermost lateral surface internal electrode 50A on the reference line SL have the same distance from the first main surface AA (see FIG. 2). Therefore, when the distance between the middle portion in the width direction of the first outermost lateral surface internal electrode 50A on the second lateral surface BB and the first main surface AA is defined as c7, a3 = c7 is satisfied.

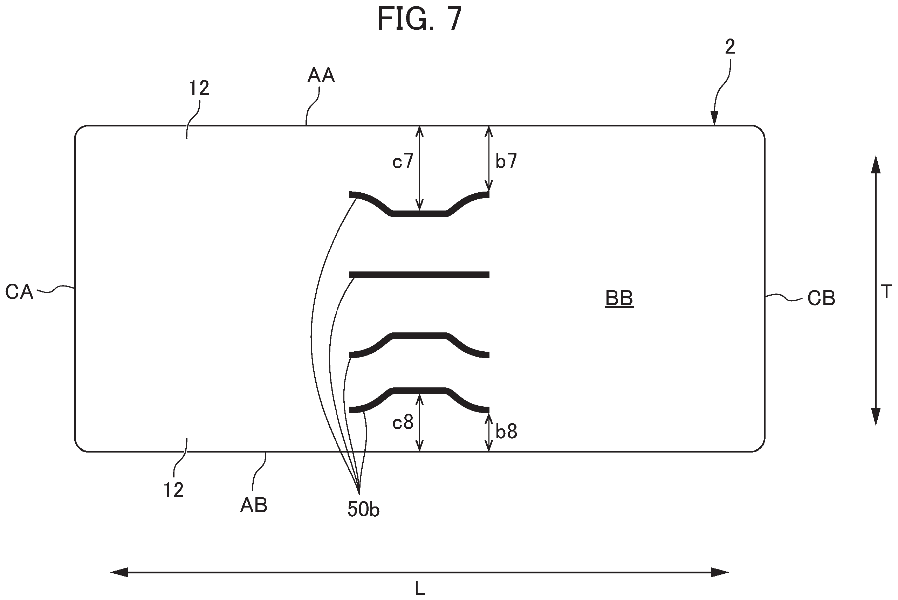

As shown in FIG. 7, on the second lateral surface BB, at least one end portion (specifically, both end portions) among the end portions in the length direction L of the first outermost lateral surface internal electrode 50A is closer to the first main surface AA than the middle portion in the length direction L of the first outermost lateral surface internal electrode 50A. Therefore, when the distance between one end portion among the end portions in the length direction L of the first outermost lateral surface internal electrode 50A on the second lateral surface BB and the first main surface AA is defined as b7, b7 ≤ c7 is satisfied, and specifically, b7 < c7 is satisfied.

At least one end portion among the end portions in the length direction L of the first outermost lateral surface internal electrode 50A on the second lateral surface BB is closer to the first main surface AA than the portion of the first outermost lateral surface internal electrode 50A on the reference line SL. Therefore, b7 < a3 is satisfied.

Next, the region adjacent to the second main surface AB of the second lateral surface BB will be described. The middle portion in the length direction L of the second outermost lateral surface internal electrode 50B on the second lateral surface BB and the portion of the second outermost lateral surface internal electrode 50B on the reference line SL have the same distance from the second main surface AB (see FIG. 2). Therefore, when the distance between the middle portion in the width direction of the second outermost lateral surface internal electrode 50B on the second lateral surface BB and the first main surface AA is defined as c8, a4 = c8 is satisfied.

On the second lateral surface BB, at least one end portion (specifically, both end portions) among the end portions in the length direction L of the second outermost lateral surface internal electrode 50B is closer to the second main surface AB than the middle portion in the length direction L of the second outermost lateral surface internal electrode 50B (see FIG. 7). Therefore, when the distance between one end portion among the end portions in the length direction L of the second outermost lateral surface internal electrode 50B on the second lateral surface BB and the second main surface AB is defined as b8, b8 ≤ c8 is satisfied, and specifically, b8 < c8 is satisfied.

At least one end portion (specifically, both end portions) among the end portions in the length direction L of the second outermost lateral surface internal electrode 50B on the second lateral surface BB is closer to the second main surface AB than the portion of the second outermost lateral surface internal electrode 50B on the reference line SL. Therefore, b8 < a4 is satisfied.

In the multilayer ceramic capacitor 1, on the location adjacent to the first end surface CA and adjacent to the first main surface AA, b5 < a3 is satisfied. Therefore, the distance between the mounting substrate and the edge portion of the first outermost lateral surface internal electrode 50A can be easily shortened compared to a case where the internal electrode is not curved. This makes it possible to reduce ESL.

Further, since b5 ≤ c5 is satisfied, it is possible to easily shorten the distance between the mounting substrate and the edge portion of the first outermost lateral surface internal electrode 50A. This makes it possible to reduce ESL. Furthermore, since b5 < c5 is satisfied, it is possible to more easily shorten the distance between the mounting substrate and the edge portion of the first outermost lateral surface internal electrode 50A. This makes it possible to more suitably reduce ESL.

Similarly, on the location adjacent to the first end surface CA and adjacent to the second main surface AB, since b6 < a4 is satisfied, it is possible to easily shorten the distance between the mounting substrate and the edge portion of the first outermost lateral surface internal electrode 50A. This makes it possible to more suitably reduce ESL.

Further, since b6 ≤ c6 is satisfied, it is possible to reduce ESL easily. Furthermore, since b6 < c6 is satisfied, it is possible to more suitably reduce ESL.

Similarly, on the location adjacent to the first main surface AA and adjacent to the second end surface CB, since b7 < a3 is satisfied, it is possible to easily shorten the distance between the mounting substrate and the edge portion of the first outermost lateral surface internal electrode 50A. This makes it possible to reduce ESL easily.

Further, since b7 ≤ c7 is satisfied, it is possible to reduce ESL easily. Furthermore, since b7 < c7 is satisfied, it is possible to easily reduce ESL more suitably.

Similarly, on the location adjacent to the second main surface AB and adjacent to the second end surface CB, since b8 < a4 is satisfied, it is possible to easily shorten the distance between the mounting substrate and the edge portion of the second outermost lateral surface internal electrode 50B. This makes it possible to reduce ESL easily.

Further, since b8 ≤ c8 is satisfied, it is possible to reduce ESL easily. Furthermore, since b8 < c8 is satisfied, it is possible to easily reduce ESL more suitably.

Among the plurality of internal electrodes 15, those provided in the middle portion in the lamination direction T of the multilayer body 2 are not curved or are slightly curved. Among the plurality of internal electrodes 15, those provided closer to the first main surface AA are curved in the same manner as the first outermost end surface internal electrode 20A and the first outermost lateral surface internal electrode 50A, and those provided closer to the second main surface AB are curved in the same manner as the second outermost end surface internal electrode 20B and the second outermost lateral surface internal electrode 50B. However, the magnitude of curvature of these internal electrodes 15 may increase as they are spaced farther from the internal electrodes 15 provided in the middle portion in the lamination direction T of the multilayer body 2.

### (Regarding Measurement Method for Distance Between Internal Electrode 15 and Each Main Surface A)

First, the end surface external electrodes 30 and lateral surface external electrodes 40 are removed from the multilayer ceramic capacitor 1 using acetone or the like to expose each end surface C and each lateral surface B of the multilayer body 2. Each exposed end surface C and each lateral surface B are observed using a scanning electron microscope (SEM), a metallographic microscope, or the like, and distances between the internal electrode 15 and each main surface A (for example, b1 to b8, c1 to c8) are respectively measured.

More specifically, b1 to b4 can be determined by measuring distances between a position 20 µm inward from an end portion in the width direction W of the end surface internal electrode 20 toward the middle in the width direction W of the end surface internal electrode 20, and the first main surface AA or the second main surface AB.
b5 to b8 can be determined by measuring distances between a position 20 µm inward from an end portion in the length direction L of the lateral surface internal electrode 50 toward the middle in the length direction L of the lateral surface internal electrode 50, and the first main surface AA or the second main surface AB.
c1 to c4 can be determined by measuring distances between a middle portion in the width direction W of the end surface internal electrode 20 and the first main surface AA or the second main surface AB.
c5 to c8 can be determined by measuring distances between a middle portion in the length direction L of the lateral surface internal electrode 50 and the first main surface AA or the second main surface AB.

Next, the multilayer body 2 is polished to expose either an LT cross section near the middle in the width direction W of the multilayer body 2 or a WT cross section near the middle in the length direction L of the multilayer body 2. The cross section is observed using a scanning electron microscope, a metallographic microscope, or the like, and distances between the internal electrode 15 and each main surface A on the reference line SL (for example, a1 to a4) are respectively measured.

### (Method of Manufacturing Multilayer Ceramic Capacitor 1)

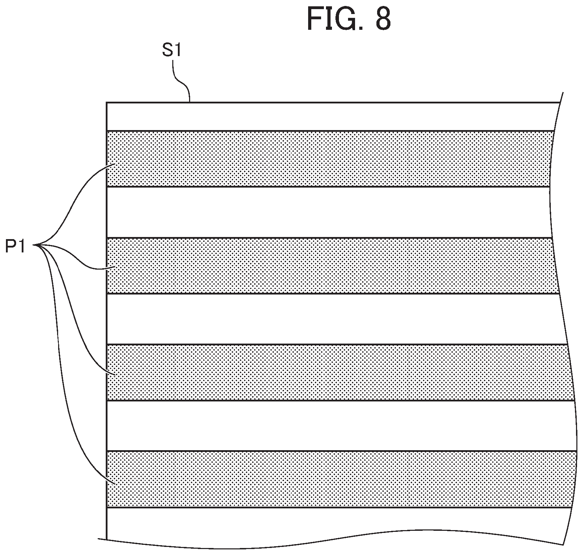

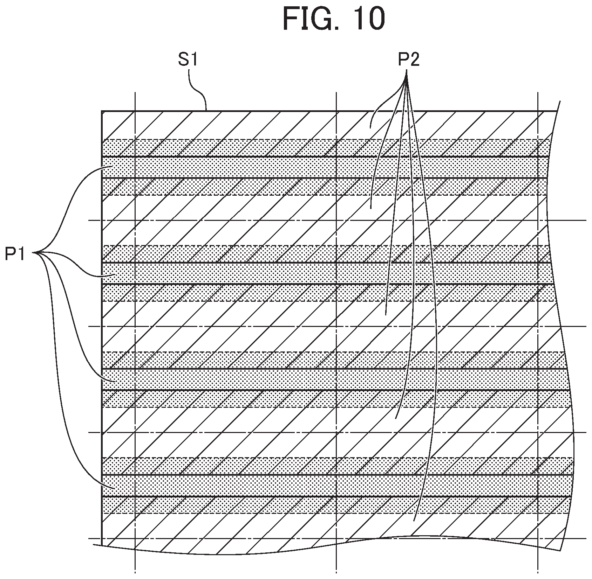

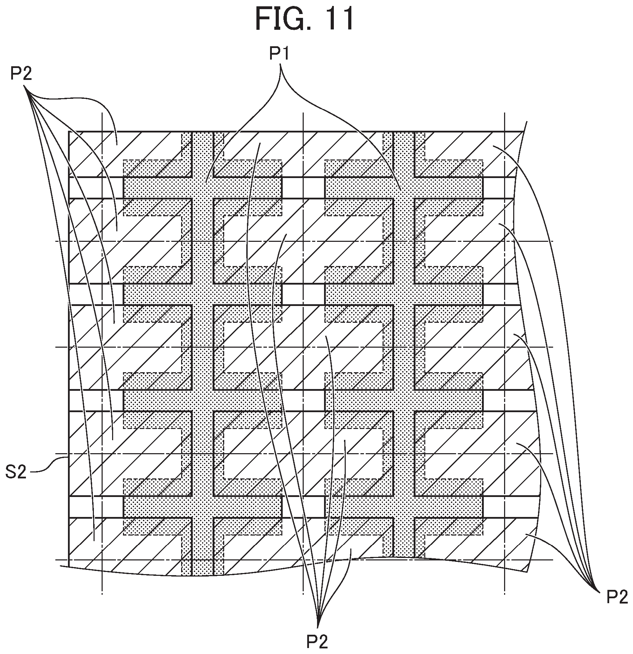

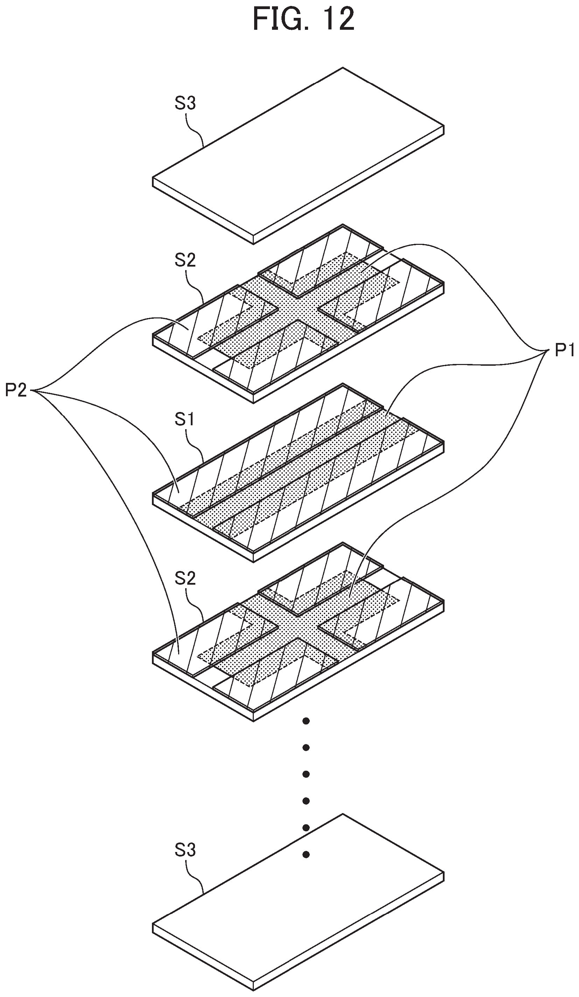

Next, a method of manufacturing the multilayer ceramic capacitor 1 will be described with reference to FIGS. 8 to 12. In FIGS. 10 and 11, positions where the mother block B1 is divided in a cutting step described later are indicated by virtual lines. In FIG. 12, for convenience, only a portion of the mother block B1 that constitutes one multilayer body is shown.

### (Printing Step)

First, an electrically conductive paste P1 functioning as the internal electrodes 15 is provided on the ceramic green sheet S. The ceramic green sheet is a strip-shaped sheet in which a ceramic slurry including ceramic powder, a binder, and a solvent is formed into a sheet shape on a carrier film using a die coater, a gravure coater, a micro gravure coater, or the like. The electrically conductive paste P1 includes a binder and a solvent. The electrically conductive paste P1 is provided on the ceramic green sheet in a desired shape by printing such as screen printing, gravure printing, relief printing, or the like. The ceramic green sheet on which the electrically conductive paste functioning as the end surface internal electrodes 20 is provided is referred to as "first ceramic green sheet S1", and the ceramic green sheet on which the electrically conductive paste functioning as the lateral surface internal electrodes 50 is provided is referred to as "second ceramic green sheet S2".

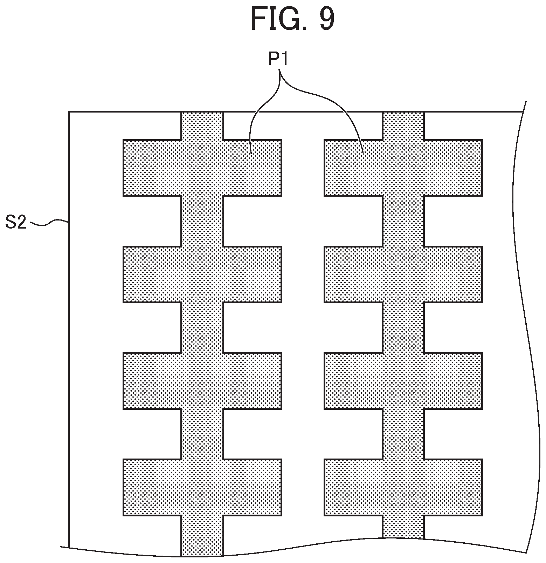

As shown in FIG. 8, the electrically conductive paste P1 is provided on the first ceramic green sheet S1. Thus, a pattern of the end surface internal electrodes 20 is formed on the first ceramic green sheet S1. As shown in FIG. 9, the electrically conductive paste P1 is provided on the second ceramic green sheet. Thus, a pattern of the lateral surface internal electrodes 50 is formed on the second ceramic green sheet S2.

Next, a dielectric paste P2 functioning as dielectric layers is provided on the ceramic green sheet S. The dielectric paste P2 is a ceramic slurry including ceramic powder, a binder, and a solvent, and includes, for example, the same components in the same ratios as the ceramic slurry used as a material for the ceramic green sheet. However, the dielectric paste P2 is not limited thereto, and the dielectric paste P2 and the ceramic slurry as a material for the ceramic green sheet may differ in the types and ratios of components included. The dielectric paste P2 is provided on the ceramic green sheet S in a desired shape by printing such as screen printing, gravure printing, relief printing, or the like.

As shown in FIG. 10, in the first ceramic green sheet S1, the dielectric paste P2 is printed as a plurality of stripe-shaped patterns aligned in a direction orthogonal to the longitudinal direction thereof. In the first ceramic green sheet S1, the dielectric paste P2 is provided in an entire region where the electrically conductive paste P1 is not provided and in regions overlapping with each edge portion of the end surface internal electrodes 20 in the width direction W, and is not provided in a region overlapping with a linear region having a constant width that passes through a middle portion of the end surface internal electrodes 20 in the width direction W and extends in the length direction L.

As shown in FIG. 11, in the second ceramic green sheet S2, the dielectric paste P2 is printed as a plurality of rectangular patterns aligned vertically and horizontally. The region where the dielectric paste P2 is not provided in the second ceramic green sheet S2 has a substantially lattice shape when viewed in the lamination direction T. The region where the dielectric paste P2 is not provided in the second ceramic green sheet S2 includes a region overlapping with a linear region having a constant width that passes through a middle portion of the lateral surface internal electrodes 50 in the width direction W and extends in the length direction L, and a region overlapping with a linear region having a constant width that passes through a middle portion of the lateral surface internal electrodes 50 in the length direction L and extends in the width direction W.

In addition, the order in which the electrically conductive paste P1 and the dielectric paste P2 are provided on the ceramic green sheet S is not limited to the order described above, and the electrically conductive paste P1 may be provided on the ceramic green sheet S on which the dielectric paste P2 has been provided.

### (Lamination Process)

Next, as shown in FIG. 12, the first ceramic green sheet S1 on which the electrically conductive paste P1 and the dielectric paste P2 are provided and the second ceramic green sheet on which the electrically conductive paste P1 and the dielectric paste P2 are provided are alternately laminated. Next, ceramic green sheets S3 for manufacturing outer layer portions are provided on both sides in the lamination direction T of the first ceramic green sheets S1 and the second ceramic green sheets S2 in the alternately laminated state. Thus, the mother block B1 is obtained.

Each of the outer layer portions 12 may include a plurality of laminated ceramic green sheets S3, or may each include a single ceramic green sheet S3. The ceramic green sheets for manufacturing the inner layer portion (that is, the first ceramic green sheet S1 and the second ceramic green sheet S2) and the ceramic green sheet S3 for manufacturing the outer layer portion may include different components. For example, it is possible to use ceramic green sheets including components that improve high permittivity as the ceramic green sheets for manufacturing the inner layer portion, and to use ceramic green sheets including components that improve moisture resistance, weather resistance, and strength resistance as the ceramic green sheets for manufacturing the outer layer portion.

In the mother block B1, due to the overlap of the ceramic green sheet S, the electrically conductive paste P1, and the dielectric paste P2, a portion of the outer surface of the mother block B1 protrudes in the lamination direction T, and the internal electrodes 15 (electrically conductive paste P1) curve in the lamination direction T. The magnitude of the protrusion of the outer surface of the mother block B1 and the magnitude of the curvature of the internal electrode 15 can be adjusted by adjusting the thickness of the dielectric paste P2 (dimension in the lamination direction T) and adjusting the amounts of the binder and plasticizer in the dielectric paste P2.

### (Thermocompression Bonding Step)

Next, the ceramic green sheets for manufacturing the outer layer portions and the laminated first ceramic green sheets S1 and second ceramic green sheets S2 are thermocompression bonded. At this time, the mother block is sandwiched in the lamination direction T by two metal plates. Accordingly, the third ceramic green sheets and the laminated first ceramic green sheets S1 and second ceramic green sheets S2 are thermocompression bonded, and the outer surfaces of the mother block B1 in the lamination direction T are flattened.

The size of the bulging of the outer surfaces of the mother block B1 and the magnitude of the curvature of the internal electrodes 15 can also be adjusted by adjusting the temperature and pressure during thermocompression bonding, adjusting the rigidity of the metal plates, and the like. When bulging exists on the outer surfaces of the mother block B1 after thermocompression bonding, it is possible to flatten the outer surfaces of the mother block B1 by grinding the bulging.

### (Cutting Step)

Next, the mother block B1 is cut in the length direction L and the width direction W. As a result, a plurality of rectangular parallelepiped blocks are obtained.

### (Multilayer Body Firing Step)

The obtained block is heated for a predetermined time in a nitrogen atmosphere at a predetermined firing temperature. Thus, the multilayer body 2 is obtained.

### (External Electrode Forming Step)

Next, lateral surface external electrodes 40 are formed on both lateral surfaces B of the multilayer body 2. The second extension portions 50b of the lateral surface internal electrodes 50 are connected to the lateral surface external electrodes 40. Each of the lateral surface external electrodes 40 is formed to cover not only the lateral surface B, but also a portion of the main surface A adjacent to the lateral surface B.

End surface external electrodes 30 are formed on both end surfaces C of the multilayer body 2. The first extension portions 20b of the end surface internal electrodes 20 are connected to each of the end surface external electrodes 30. Each of the end surface external electrodes 30 is formed to cover not only the end surface C, but also portions of the main surface A and the lateral surface B adjacent to the end surface C.

### (External Electrode Firing Step)

Next, the multilayer body 2 on which the end surface external electrodes 30 and the lateral surface external electrodes 40 are formed is heated at a predetermined firing temperature for a predetermined time in a nitrogen atmosphere. Thus, the end surface external electrodes 30 and the lateral surface external electrodes 40 are fired onto the multilayer body 2. As described above, the multilayer ceramic capacitor 1 shown in FIG. 1 is obtained.

### (Advantageous Effects according to First Embodiment)

According to the present embodiment, it is possible to achieve the following advantageous effects.

According to the present embodiment, when a distance between the first outermost end surface internal electrode 20A and the first main surface AA on the reference line SL is defined as a1, and a distance between one end portion among the end portions in the width direction W of the first outermost end surface internal electrode 20A on the first end surface CA and the first main surface AA is defined as b1, b1

### < a1 is satisfied.

When the distance through which electricity flows between the internal electrode and the mounting substrate is shortened, ESL is reduced in the multilayer ceramic capacitor. Particularly, in a high frequency region, current flowing through the internal electrode is likely to flow through an edge portion of the internal electrode more easily and, therefore, it is considered that an effective reduction of ESL is possible by bringing the edge portion of the internal electrode and the mounting substrate closer to each other.

Since b1 < a1 is satisfied, it is possible to easily shorten the distance between the mounting substrate and the edge portion of the first outermost end surface internal electrode 20A compared to a case where the internal electrode 15 is not curved. This makes it possible to reduce ESL.

Therefore, it is possible to provide a multilayer ceramic capacitor that easily reduces ESL.

According to the present embodiment, when the distance between a middle portion in the width direction W of the first outermost end surface internal electrode 20A on the first end surface CA and the first main surface AA is defined as c1, b1 ≤ c1 is satisfied.

This makes it possible to easily shorten the distance between the mounting substrate and the edge portion of the first outermost end surface internal electrode 20A and, therefore, it is possible to reduce ESL.

Further, according to the present embodiment, b1 < c1 is satisfied. This makes it possible to more easily shorten the distance between the mounting substrate and the edge portion of the first outermost end surface internal electrode 20A and, therefore, it is possible to reduce ESL more suitably.

According to the present embodiment, when the distance between the second outermost end surface internal electrode 20B and the second main surface AB on the reference line SL is defined as a2, and the distance between one end portion among the end portions in the width direction W of the second outermost end surface internal electrode 20B on the first end surface CA and the second main surface AB is defined as b2, b2 < a2 is satisfied. This makes it possible to easily shorten the distance between the edge portion of the internal electrode 15 and the mounting substrate and, therefore, it is possible to reduce ESL.

According to the present embodiment, when the distance between a middle portion in the width direction W of the second outermost end surface internal electrode 20B on the first end surface CA and the second main surface AB is defined as c2, b2 ≤ c2 is satisfied. This makes it possible to easily shorten the distance between the edge portion of the internal electrode 15 and the mounting substrate and, therefore, it is possible to reduce ESL more suitably.

Further, according to the present embodiment, b2 < c2 is satisfied. This makes it possible to easily shorten the distance between the edge portion of the internal electrode 15 and the mounting substrate and, therefore, it is possible to reduce ESL.

According to the present embodiment, when the distance between one end portion among the end portions in the width direction W of the first outermost end surface internal electrode 20A on the second end surface CB and the first main surface AA is defined as b3, b3 < a1 is satisfied. This makes it possible to easily shorten the distance between the edge portion of the internal electrode 15 and the mounting substrate and, therefore, it is possible to reduce ESL.

According to the present embodiment, when the distance between a middle portion in the width direction W of the first outermost end surface internal electrode 20A on the second end surface CB and the first main surface AA is defined as c3, b3 ≤ c3 is satisfied. This makes it possible to easily shorten the distance between the edge portion of the internal electrode 15 and the mounting substrate and, therefore, it is possible to reduce ESL.

Further, according to the present embodiment, b3 < c3 is satisfied. This makes it possible to shorten the distance between the edge portion of the internal electrode 15 and the mounting substrate and, therefore, it is possible to reduce ESL more suitably.

According to the present embodiment, when the distance between the second outermost lateral surface internal electrode 20B and the second main surface AB on the reference line SL is defined as a2, and the distance between one end portion among the end portions in the length direction L of the second outermost end surface internal electrode 20B on the second end surface CB and the second main surface AB is defined as b4, b4 < a2 is satisfied. This makes it possible to shorten the distance between the edge portion of the internal electrode 15 and the mounting substrate and, therefore, it is possible to reduce ESL.

According to the present embodiment, when the distance between a middle portion in the width direction W of the second outermost end surface internal electrode 20B on the second end surface CB and the second main surface AB is defined as c4, b4 ≤ c4 is satisfied. This makes it possible to easily shorten the distance between the edge portion of the internal electrode 15 and the mounting substrate and, therefore, it is possible to reduce ESL.

Further, according to the present embodiment, b4 < c4 is satisfied. This makes it possible to shorten the distance between the edge portion of the internal electrode 15 and the mounting substrate and, therefore, it is possible to reduce ESL.

According to the present embodiment, when the distance between the first outermost lateral surface internal electrode and the first main surface AA on the reference line SL is defined as a3, and the distance between one end portion among the end portions in the length direction L of the first outermost lateral surface internal electrode 50A on the first lateral surface BA and the first main surface AA is defined as b5, b5 < a3 is satisfied. This makes it possible to easily shorten the distance between the edge portion of the internal electrode 15 and the mounting substrate and, therefore, it is possible to reduce ESL.

According to the present embodiment, when the distance between a middle portion in the length direction L of the first outermost lateral surface internal electrode 50A on the first lateral surface BA and the first main surface AA is defined as c5, b5 ≤ c5 is satisfied. This makes it possible to easily shorten the distance between the edge portion of the internal electrode 15 and the mounting substrate and, therefore, it is possible to reduce ESL.

Further, according to the present embodiment, b5 < c5 is satisfied. This makes it possible to easily shorten the distance between the edge portion of the internal electrode 15 and the mounting substrate and, therefore, it is possible to reduce ESL.

According to the present embodiment, when the distance between the second outermost lateral surface internal electrode 50B and the second main surface AB on the reference line SL is defined as a4, and the distance between one end portion among the end portions in the length direction L of the second outermost lateral surface internal electrode 50B on the first lateral surface BA and the second main surface AB is defined as b6, b6 < a4 is satisfied. This makes it possible to easily shorten the distance between the edge portion of the internal electrode 15 and the mounting substrate and, therefore, it is possible to reduce ESL.

According to the present embodiment, when the distance between a middle portion in the length direction L of the second outermost lateral surface internal electrode 50B on the first lateral surface BA and the second main surface AB is defined as c6, b6 ≤ c6 is satisfied. This makes it possible to easily shorten the distance between the edge portion of the internal electrode 15 and the mounting substrate and, therefore, it is possible to reduce ESL.

Further, according to the present embodiment, b6 < c6 is satisfied. This makes it possible to easily shorten the distance between the edge portion of the internal electrode 15 and the mounting substrate and, therefore, it is possible to reduce ESL more suitably.

According to the present embodiment, when the distance between one end portion among the end portions in the length direction L of the first outermost lateral surface internal electrode 50A on the second lateral surface BB and the first main surface AA is defined as b7, b7 < a3 is satisfied. This makes it possible to easily shorten the distance between the edge portion of the internal electrode 15 and the mounting substrate and, therefore, it is possible to reduce ESL.

According to the present embodiment, when the distance between a middle portion in the length direction L of the first outermost lateral surface internal electrode 50A on the second lateral surface BB and the first main surface AA is defined as c7, d7 ≤ c7 is satisfied. This makes it possible to easily shorten the distance between the edge portion of the internal electrode 15 and the mounting substrate and, therefore, it is possible to reduce ESL.

Further, according to the present embodiment, d7 < c7 is satisfied. This makes it possible to shorten the distance between the edge portion of the internal electrode 15 and the mounting substrate and, therefore, it is possible to reduce ESL more suitably.

According to the present embodiment, when the distance between the second outermost lateral surface internal electrode 50B and the second main surface AB on the reference line SL is defined as a4, and the distance between one end portion among the end portions in the length direction L of the second outermost lateral surface internal electrode 50B on the second lateral surface BB and the second main surface AB is defined as b8, b8 < a4 is satisfied. This makes it possible to shorten the distance between the edge portion of the internal electrode 15 and the mounting substrate and, therefore, it is possible to reduce ESL more suitably.

According to the present embodiment, when the distance between a middle portion in the length direction L of the second outermost lateral surface internal electrode 50B on the second lateral surface BB and the second main surface AB is defined as c8, b8 ≤ c8 is satisfied. This makes it possible to suppress separation between the edge portion of the internal electrode 15 and the mounting substrate and, therefore, it is possible to reduce ESL.

Further, according to the present embodiment, b8 < c8 is satisfied. This makes it possible to easily shorten the distance between the edge portion of the internal electrode 15 and the mounting substrate and, therefore, it is possible to reduce ESL.

### <Second Embodiment>

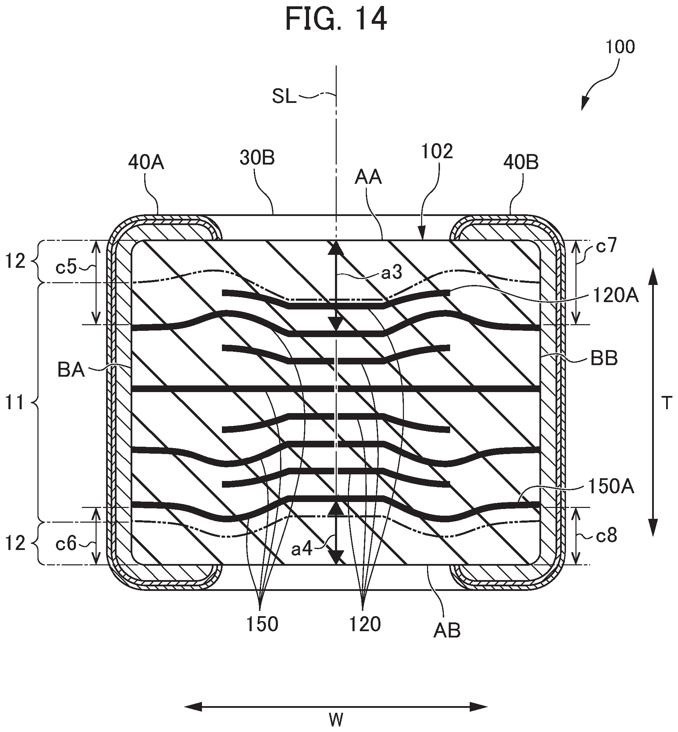

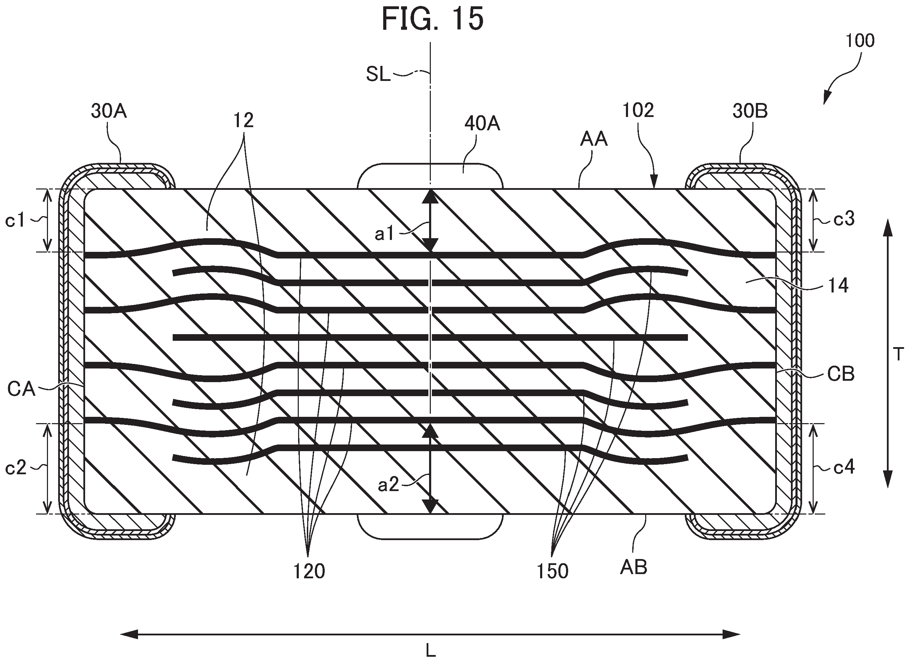

Next, a multilayer ceramic capacitor 100 according to a second embodiment of the present invention will be described. Hereinafter, the description will focus on differences from the first embodiment, and the same reference numerals may be assigned to the same configurations as those of the multilayer ceramic capacitor 1 according to the first embodiment, and descriptions thereof may be omitted. The cross section in FIG. 14 is a cross section parallel to the length direction L and the lamination direction T, and passing through a middle portion of the multilayer body 102 in the width direction W. The cross section in FIG. 15 is a cross section parallel to the width direction W and the lamination direction T, and passing through a middle portion of the multilayer body 102 in the length direction L.

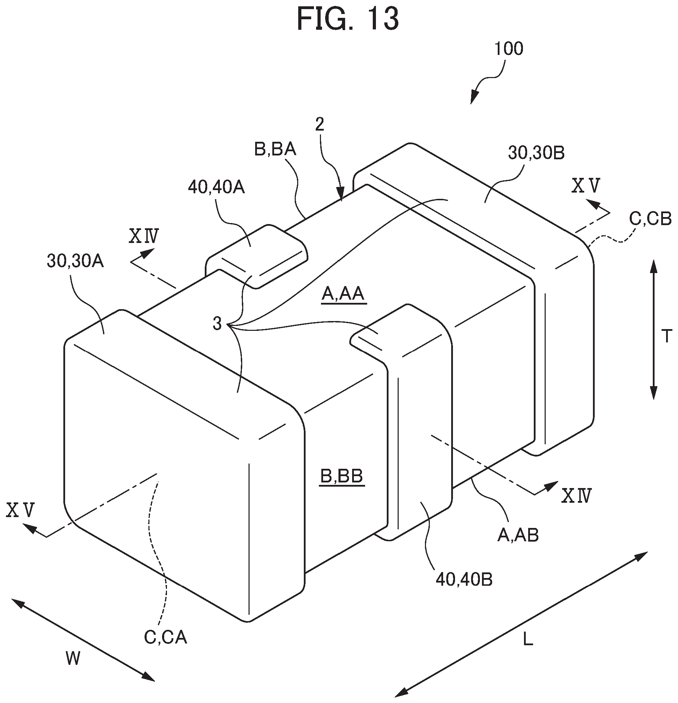

As shown in FIG. 13, the multilayer ceramic capacitor 100 according to the second embodiment is a so-called three-terminal type multilayer ceramic capacitor, similar to the first embodiment. However, as described below, in the second embodiment, the manner of curvature of the internal electrodes differs from that of the first embodiment.

### (Regarding Curvature of End Surface Internal Electrodes 120)

First, a region adjacent to the first main surface AA of the first end surface CA will be described. As shown in FIG. 15, the middle portion in the width direction W of the first outermost end surface internal electrode 120A on the first end surface CA is closer to the first main surface AA than a portion of the first outermost end surface internal electrode 120A on the reference line SL. Therefore, c1 < a1 is satisfied. This makes it possible to easily reduce the distance between the end portion of the internal electrode and the mounting substrate, and thus it is possible to reduce ESL.

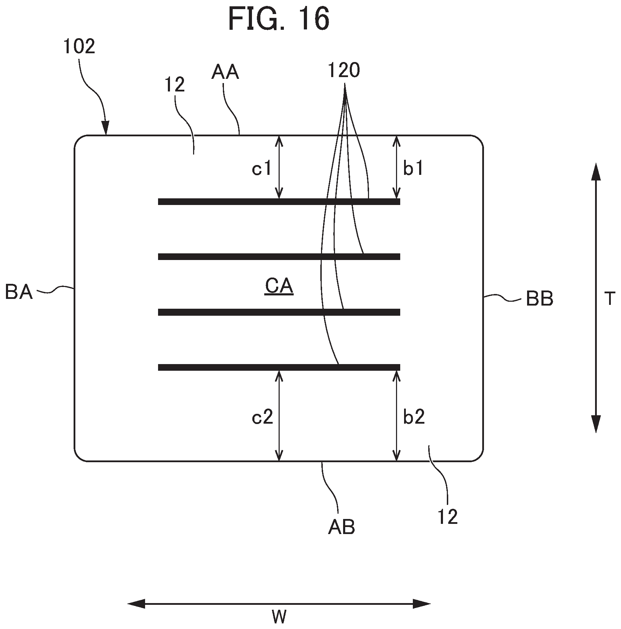

As shown in FIG. 16, on the first end surface CA, at least one end portion (specifically, both end portions) among the end portions in the width direction W of the first outermost end surface internal electrode 120A and the middle portion in the width direction W of the first outermost end surface internal electrode 120A have the same distance from the first main surface AA. Therefore, b1 = c1 is satisfied. In addition, b1 and c1 may be slightly different from each other. However, it is preferable that b1 ≤ c1 is satisfied. In such a case, it is possible to easily reduce the distance between the end portion of the internal electrode and the mounting substrate, and thus it is possible to reduce ESL.

At least one end portion (specifically, both end portions) among the end portions in the width direction W of the first outermost end surface internal electrode 120A on the first end surface CA is closer to the first main surface AA than a portion of the first outermost end surface internal electrode 120A on the reference line SL. Therefore, b1 < a1 is satisfied. This makes it possible to easily reduce the distance between the end portion of the internal electrode and the mounting substrate, and thus it is possible to reduce ESL.

Next, a region adjacent to the second main surface AB of the first end surface CA will be described. A middle portion in the width direction W of the second outermost end surface internal electrode 120B on the first end surface CA is spaced farther from the second main surface AB than a portion of the second outermost end surface internal electrode 120B on the reference line SL (see FIG. 15). Therefore, a2 < c2 is satisfied. This makes it possible to easily reduce the distance between the end portion of the internal electrode and the mounting substrate, and thus it is possible to reduce ESL.

On the first end surface CA, at least one end portion (specifically, both end portions) among the end portions in the width direction W of the second outermost end surface internal electrode 120B and the middle portion in the width direction W of the second outermost end surface internal electrode 120B have the same distance from the second main surface AB (see FIG. 16). Therefore, b2 = c2 is satisfied. In addition, b2 and c3 may be slightly different from each other. However, it is preferable that b2 ≤ c2 is satisfied. In such a case, it is possible to easily reduce the distance between the end portion of the internal electrode and the mounting substrate, and thus it is possible to reduce ESL.

At least one end portion (specifically, both end portions) among the end portions in the width direction W of the second outermost end surface internal electrode 120B on the first end surface CA is closer to the second main surface AB than a portion of the second outermost end surface internal electrode 120B on the reference line SL. Therefore, b2 < a2 is satisfied. This makes it possible to easily reduce the distance between the end portion of the internal electrode and the mounting substrate, and thus it is possible to reduce ESL.

Next, a region adjacent to the first main surface AA of the second end surface CB will be described. The middle portion in the width direction W of the first outermost end surface internal electrode 120A on the second end surface CB is spaced farther from the first main surface AA than a portion of the first outermost end surface internal electrode 120A on the reference line SL (see FIG. 14). Therefore, a1 < c3 is satisfied. This makes it possible to easily reduce the distance between the end portion of the internal electrode and the mounting substrate, and thus it is possible to reduce ESL.

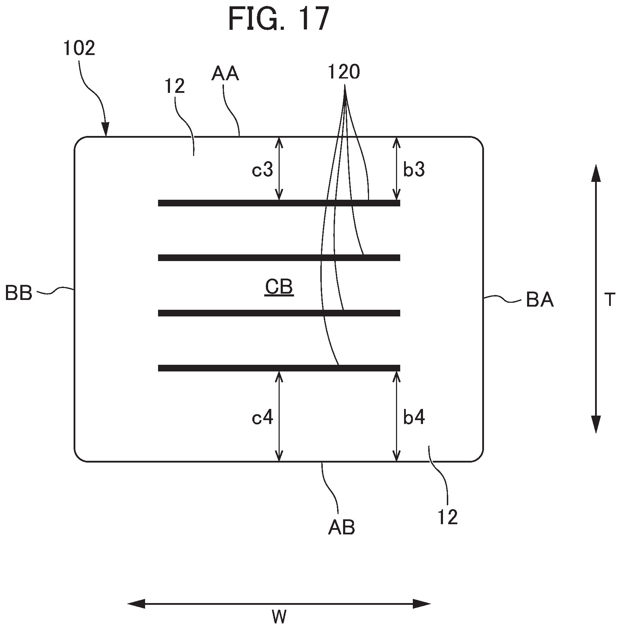

As shown in FIG. 17, on the second end surface CB, at least one end portion (specifically, both end portions) among the end portions in the width direction W of the first outermost end surface internal electrode 120A and the middle portion in the width direction W of the first outermost end surface internal electrode 120A have the same distance from the first main surface AA. Therefore, b3 = c3 is satisfied. In addition, b3 and c3 may be slightly different from each other. However, it is preferable that b3 ≤ c3 is satisfied. In such a case, it is possible to easily reduce the distance between the end portion of the internal electrode and the mounting substrate, and thus it is possible to reduce ESL.

At least one end portion (specifically, both end portions) among the end portions in the width direction W of the first outermost end surface internal electrode 120A on the second end surface CB is closer to the first main surface AA than a portion of the first outermost end surface internal electrode 120A on the reference line. Therefore, b3 < a1 is satisfied. This makes it possible to easily reduce the distance between the end portion of the internal electrode and the mounting substrate, and thus it is possible to reduce ESL.

Next, a region adjacent to the second main surface AB of the second end surface CB will be described. A middle portion in the width direction W of the second outermost end surface internal electrode 120B on the second end surface CB is spaced farther from the second main surface AB than a portion of the second outermost end surface internal electrode 120B on the reference line SL (see FIG. 15). Therefore, a2 < c4 is satisfied. This makes it possible to easily reduce the distance between the end portion of the internal electrode and the mounting substrate, and thus it is possible to reduce ESL.

On the second end surface CB, at least one end portion (specifically, both end portions) among the end portions in the width direction W of the second outermost end surface internal electrode 120B and the middle portion in the width direction W of the second outermost end surface internal electrode 120B have the same distance from the second main surface AB (see FIG. 17). Therefore, b4 = c4 is satisfied. In addition, b4 and c4 may be slightly different from each other. However, it is preferable that b4 ≤ c4 is satisfied. In such a case, it is possible to easily reduce the distance between the end portion of the internal electrode and the mounting substrate, and thus it is possible to reduce ESL.

At least one end portion (specifically, both end portions) among the end portions in the width direction W of the second outermost end surface internal electrode 120B on the second end surface CB is closer to the second main surface AB than a portion of the second outermost end surface internal electrode 120B on the reference line SL. Therefore, b4 < a2 is satisfied. This makes it possible to easily reduce the distance between the end portion of the internal electrode and the mounting substrate, and thus it is possible to reduce ESL.

### (Regarding Curvature of Lateral Surface Internal Electrodes 150)

First, the region adjacent to the first main surface AA of the first lateral surface BA will be described. As shown in FIG. 14, the middle portion in the length direction L of the first outermost lateral surface internal electrode 150A on the first lateral surface BA is closer to the first main surface AA than the portion of the first outermost lateral surface internal electrode 150A on the reference line SL. Therefore, a3 < c5 is satisfied. This makes it possible to easily shorten the distance between the end portion of the internal electrode and the mounting substrate, thereby reducing ESL.

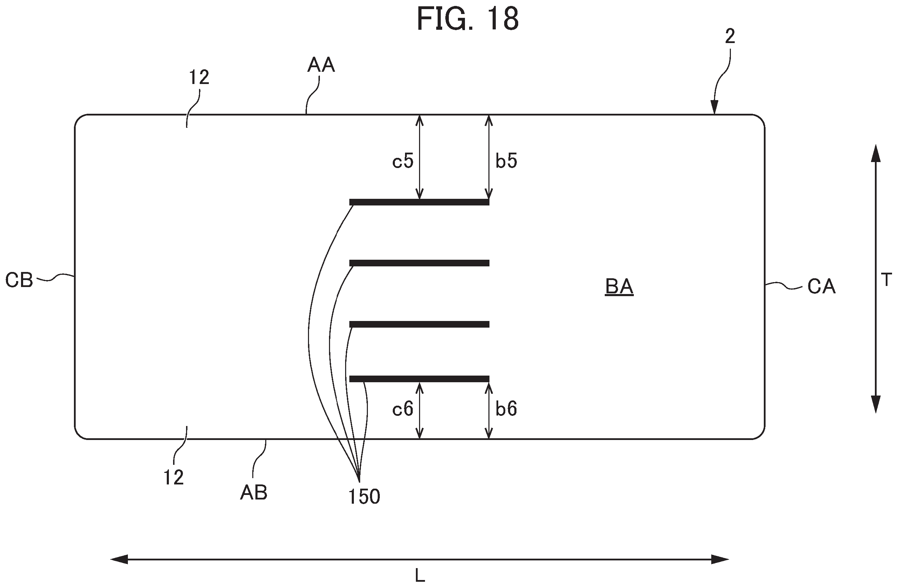

As shown in FIG. 18, on the first lateral surface BA, at least one end portion (specifically, both end portions) among the end portions in the length direction L of the first outermost lateral surface internal electrode 150A and the middle portion in the length direction L of the first outermost lateral surface internal electrode 150A have the same distance from the first main surface AA. Therefore, b5 = c5 is satisfied. In addition, b5 and c5 may be slightly different from each other.

At least one end portion (specifically, both end portions) among the end portions in the length direction L of the first outermost lateral surface internal electrode 150A on the first lateral surface BA is closer to the first main surface AA than a portion of the first outermost lateral surface internal electrode 150A on the reference line SL. Therefore, b5 < a3 is satisfied. This makes it possible to easily shorten the distance between the end portion of the internal electrode and the mounting substrate, thereby reducing ESL.

Next, a region adjacent to the second main surface AB of the first lateral surface BA will be described. A middle portion in the length direction L of the second outermost lateral surface internal electrode 150B on the first lateral surface BA is closer to the second main surface AB than the portion of the second outermost lateral surface internal electrode 150B on the reference line SL (see FIG. 14). Therefore, a4 < c6 is satisfied. This makes it possible to easily shorten the distance between the end portion of the internal electrode and the mounting substrate, thereby reducing ESL.

On the first lateral surface BA, at least one end portion (specifically, both end portions) among the end portions in the length direction L of the second outermost lateral surface internal electrode 150B and the middle portion in the length direction L of the second outermost lateral surface internal electrode 150B have the same distance from the second main surface AB (see FIG. 18). Therefore, b6 = c6 is satisfied. In addition, b6 and c6 may be slightly different from each other.

At least one end portion (specifically, both end portions) among the end portions in the length direction L of the second outermost lateral surface internal electrode 150B on the first lateral surface BA is closer to the second main surface AB than the portion of the second outermost lateral surface internal electrode 150B on the reference line SL. Therefore, b6 < a4 is satisfied. This makes it possible to easily shorten the distance between the end portion of the internal electrode and the mounting substrate, thereby reducing ESL.

Next, a region adjacent to the first main surface AA of the second lateral surface BB will be described. A middle portion in the length direction L of the first outermost lateral surface internal electrode 150A on the second lateral surface BB is closer to the first main surface AA than the portion of the first outermost lateral surface internal electrode 150A on the reference line SL (see FIG. 14). Therefore, a3 < c7 is satisfied. This makes it possible to easily shorten the distance between the end portion of the internal electrode and the mounting substrate, thereby reducing ESL.

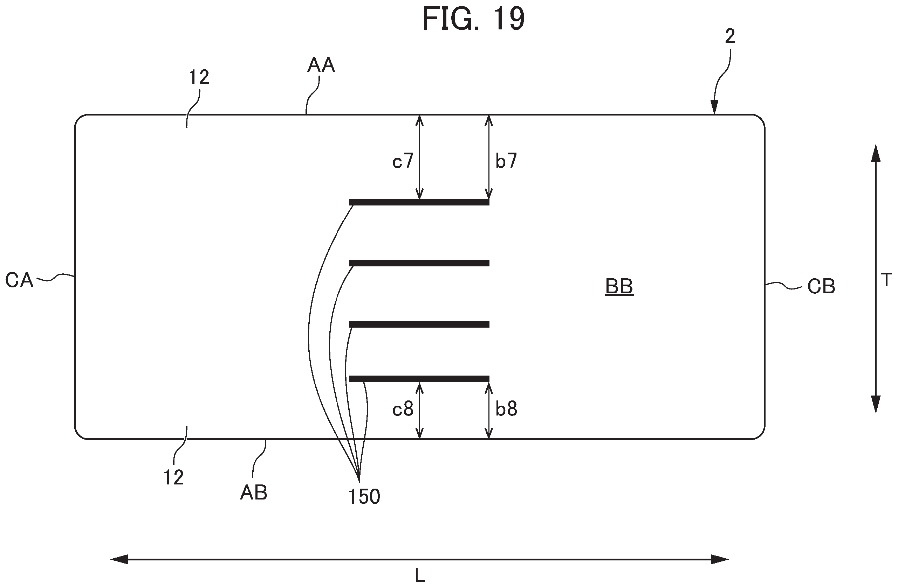

As shown in FIG. 19, on the second lateral surface BB, at least one end portion (specifically, both end portions) among the end portions in the length direction L of the first outermost lateral surface internal electrode 150A and the middle portion in the length direction L of the first outermost lateral surface internal electrode 150A have the same distance from the first main surface AA. Therefore, b7 = c7 is satisfied. In addition, b7 and c7 may be slightly different from each other.

At least one end portion (specifically, both end portions) among the end portions in the length direction L of the first outermost lateral surface internal electrode 150A on the second lateral surface BB is closer to the first main surface AA than the portion of the first outermost lateral surface internal electrode 150A on the reference line SL. Therefore, b7 < a3 is satisfied. This makes it possible to easily shorten the distance between the end portion of the internal electrode and the mounting substrate, thereby reducing ESL.

Next, a region adjacent to the second main surface AB of the second lateral surface BB will be described. A middle portion in the length direction L of the second outermost lateral surface internal electrode 150B on the second lateral surface BB is spaced farther from the second main surface AB more than the portion of the second outermost lateral surface internal electrode 150B on the reference line SL (see FIG. 14). Therefore, a4 < c8 is satisfied. This makes it possible to easily shorten the distance between the end portion of the internal electrode and the mounting substrate, thereby reducing ESL.

On the second lateral surface BB, at least one end portion (specifically, both end portions) among the end portions in the length direction L of the second outermost lateral surface internal electrode 150B and the middle portion in the length direction L of the second outermost lateral surface internal electrode 150B have the same distance from the second main surface AB (see FIG. 19). Therefore, b8 = c8 is satisfied. In addition, b8 and c8 may be slightly different from each other.

At least one end portion (specifically, both end portions) among the end portions in the length direction L of the second outermost lateral surface internal electrode 150B on the second lateral surface BB is closer to the second main surface AB than the portion of the second outermost lateral surface internal electrode 150B on the reference line SL. Therefore, b8 < a4 is satisfied. This makes it possible to easily shorten the distance between the end portion of the internal electrode and the mounting substrate, thereby reducing ESL.

### (Manufacturing Method of Multilayer Ceramic Capacitor 100)

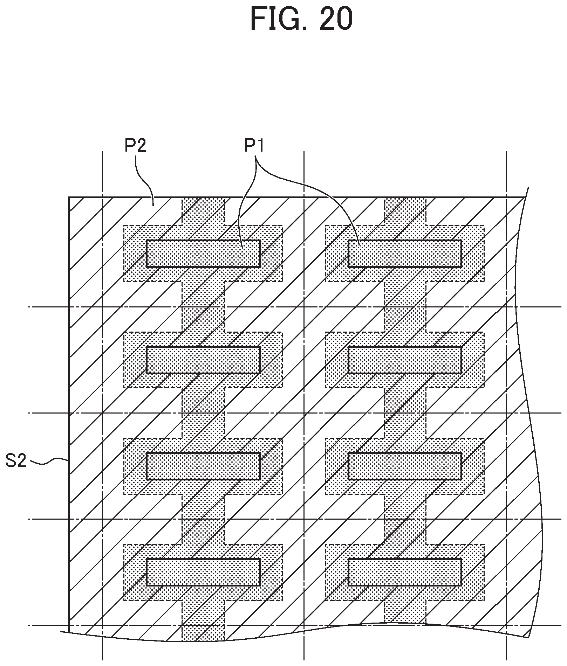

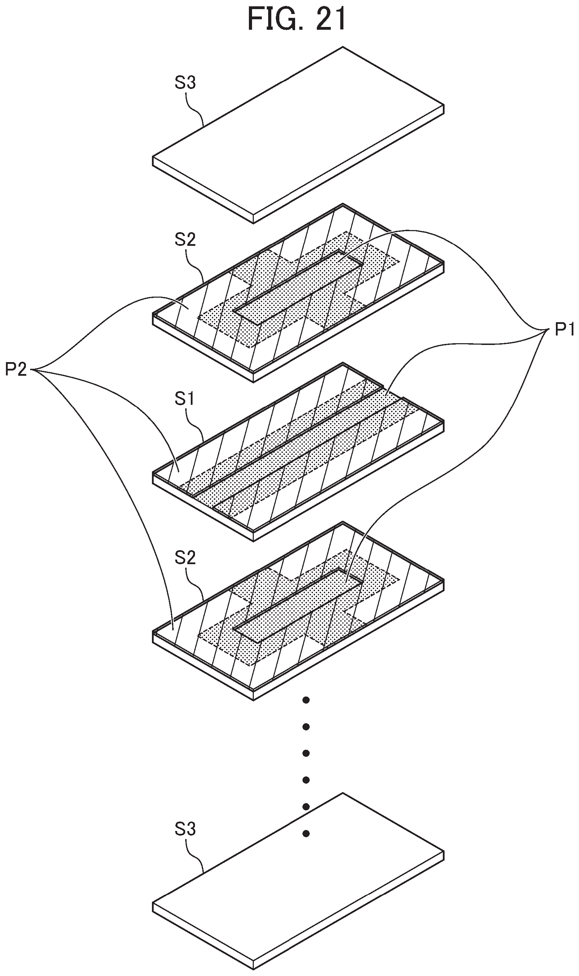

Next, a manufacturing method of the multilayer ceramic capacitor 100 according to the second embodiment will be described with reference to FIGS. 20 and 21. In FIG. 20, positions where the mother block B2 is divided in a cutting step described later are indicated by virtual lines. In FIG. 21, for convenience, only a portion constituting one multilayer body of the mother block B2 is shown.

In the second embodiment, the configuration of the dielectric paste P2 on the second ceramic green sheet S2 is different from that in the first embodiment. As shown in FIG. 20, on the second ceramic green sheet S2, the dielectric paste P2 is provided in the entire region where the lateral surface internal electrode 150 is not provided and in a region overlapping with the peripheral edge portion of the lateral surface internal electrode 150, and is not provided in a region overlapping with a substantially rectangular region including the middle portion in the length direction L and the width direction W of the second counter portion 150b when viewed in the lamination direction T.

The configuration of the dielectric paste P2 on the first ceramic green sheet S1 is the same as in the first embodiment.

As shown in FIG. 21, the first ceramic green sheet S1 on which the electrically conductive paste P1 and the dielectric paste P2 are provided and the second ceramic green sheet on which the electrically conductive paste P1 and the dielectric paste P2 are provided are alternately laminated, as in the first embodiment.

While embodiments of the present invention have been described above, the present invention is not limited to the above-described embodiments, and various changes and modifications thereto are possible.

The configuration of curvature of the end surface internal electrode is not limited to those in the above embodiments. However, it is preferred that b1 < a1, and it is more preferred that b1 < a1 and b2 < a2. This makes it possible to reduce ESL more suitably.

In addition, it is preferred that b3 < a1 is satisfied, and it is more preferred that b3 < a1 and b4 < a2 are satisfied. This makes it possible to reduce ESL more suitably.

In addition, b1, b3, c1, and c3 do not necessarily have to be smaller than a1, and it is possible to reduce ESL by setting b1 < c1 or b3 < c3. However, it is possible to reduce ESL more suitably by making b1, b3, c1, and c3 smaller than a1.

Similarly, b2, b4, c2, and c4 do not necessarily have to be smaller than a2, and it is possible to reduce ESL by setting b2 < c2 or b4 < c4. However, it is possible to reduce ESL more suitably by making b2, b4, c2, and c4 smaller than a2.

The configuration of curvature of the lateral surface internal electrodes is not limited to those of the above embodiments. However, it is preferred that b5 < a3 is satisfied, and it is more preferred that b5 < a3 and b7 < a4 are satisfied. This makes it possible to reduce ESL more suitably.

In addition, it is preferred that b6 < a3 is satisfied, and it is more preferred that b6 < a3 and b8 < a4 are satisfied. This makes it possible to reduce ESL more suitably.

In addition, b5, b7, c5, and c7 do not necessarily have to be smaller than a3, and it is possible to reduce ESL by setting b5 < c5 or b7 < c7. However, it is possible to reduce ESL more suitably by making b5, b7, c5, and c7 smaller than a3.

Similarly, b6, b8, c6, and c8 do not necessarily have to be smaller than a4, and it is possible to reduce ESL by setting b6 < c6 or b8 < c8. However, it is possible to reduce ESL by making b6, b8, c6, and c8 smaller than a4.

The arrangement patterns and components of the dielectric paste P2 and the electrically conductive paste P1 are not limited to those of the above embodiments. By appropriately changing these, it is possible to adjust the size relationships of a1 to a4, b1 to b8, and c1 to c8.

In the above embodiments, each main surface A of the multilayer body is a flat surface. However, irregularities may be formed on each main surface A. However, each main surface A is preferably as flat as possible in that the distance between the edge portions of the internal electrodes and each main surface A can be suitably shortened.

In the above embodiments, each of the end surface internal electrodes 20 extends between both end surfaces C of the multilayer body 2 and is separated from both lateral surfaces B by a fixed distance. However, the configuration of each of the end surface internal electrodes is not limited to this.

Each of the first extension portions 20b may have a portion having a width direction W dimension greater than the width direction W dimension of the first counter portion 20a. End portions in the width direction W of a portion of the first extension portion 20b may be in contact with both lateral surfaces B. The end portions in the width direction W of the first extension portion 20b in contact with both lateral surfaces B may be exposed from both lateral surfaces B. End portions in the length direction L of the first extension portion 20b may be in contact with the entirety of one end surface. The end surface internal electrode 20 having the first extension portion 20b in which the end portions in the width direction W are in contact with both lateral surfaces B and the end portions in the length direction L are in contact with the entirety of one end surface has an H-shape when viewed in the lamination direction T. Each end portion in the width direction W of the first extension portion 20b may be spaced apart from each lateral surface B without being in contact with each lateral surface B.

The ESL of the end surface internal electrode 20 having an H-shape when viewed in the lamination direction T is further suppressed.

During manufacture of such a multilayer ceramic capacitor, when the electrically conductive paste P1 is printed on the first ceramic green sheet S1, a plurality of stripe-shaped electrically conductive pastes P1 extending in the length direction L and a plurality of stripe-shaped electrically conductive pastes P1 extending in the width direction W are each printed on the first ceramic green sheet S1 at predetermined intervals. When the first laminated ceramic green sheet S1 is viewed in the lamination direction, the electrically conductive paste P1 is provided in a lattice pattern. For example, the electrically conductive paste P1 extending in the length direction L is printed so as not to overlap with the cutting line in the length direction L in the cutting step. The electrically conductive paste P1 extending in the width direction W is printed at a position where the middle portion in the short direction overlaps with the cutting line in the width direction W in the cutting step.

The dielectric paste P2 is preferably printed on the first ceramic green sheet so as to overlap at least with portions of the electrically conductive paste P1 that function as each end portion in the width direction W of the first extension portion. In that case, in the multilayer ceramic capacitor, each end portion in the width direction W of the first extension portion of the first outermost end surface internal electrode can be brought closer to the first main surface AA, or each end portion in the width direction W of the first extension portion of the second outermost end surface internal electrode can be brought closer to the second main surface AB. Therefore, it is possible to reduce b1 through b4.

In the above embodiments, when the dielectric paste P2 is printed on the first ceramic green sheet S1, the dielectric paste P2 is provided in the entire region where the electrically conductive paste P1 is not provided and in regions overlapping with each edge portion in the width direction W of the end surface internal electrode 20, and is not provided in regions overlapping with a linear region of constant width extending in the length direction L through the middle portion in the width direction W of the end surface internal electrode 20. However, the configuration of the dielectric paste P2 is not limited to this. The dielectric paste P2 may be provided so as to overlap in multiple layers.

For example, the dielectric paste P2 may be provided on the first ceramic green sheet S1 so as to overlap with regions of the electrically conductive paste P1 that function as the first extension portion. In that case, for example, a plurality of electrically conductive pastes P1 are printed in stripe shapes extending in the length direction L at predetermined intervals on the first ceramic green sheet. A plurality of dielectric pastes P2 are printed in stripe shapes extending in the length direction L at predetermined intervals on the first ceramic green sheet S1, and further, a plurality of dielectric pastes P2 are printed in stripe shapes extending in the width direction W at predetermined intervals. When the first laminated ceramic green sheet S1 is viewed in the lamination direction, the plurality of dielectric pastes P2 are provided in a lattice pattern. The dielectric paste P2 extending in the length direction L is printed at a position where the middle portion in the short direction overlaps with the cutting line in the length direction L in the cutting step. The dielectric paste P2 extending in the length direction L is printed so that the end portions in the width direction W thereof overlap with the end portions in the width direction W of the electrically conductive paste P1. The dielectric paste P2 extending in the width direction W is printed, for example, at a position where the middle portion in the short direction overlaps with the cutting line in the width direction W in the cutting step.

In that case, each end portion in the length direction L of the portion of the electrically conductive paste P1 that functions as one end surface internal electrode after cutting the mother block is in a state overlapping with the dielectric paste P2 over the entire width direction W.

In that case, in the multilayer ceramic capacitor, each end portion in the length direction L of the first outermost end surface internal electrode can be brought closer to the first main surface AA, or each end portion in the length direction L of the second outermost end surface internal electrode can be brought closer to the second main surface AB. Therefore, it is possible to reduce b1 through b4 and c1 through c4.

Furthermore, each end portion in the length direction L of the portion of the electrically conductive paste P1 that functions as one end surface internal electrode after cutting the mother block is in a state where each end portion in the width direction W thereof overlaps with the dielectric paste P2 extending in the length direction L and the dielectric paste P2 extending in the width direction W.

In that case, in the multilayer ceramic capacitor, each end portion in the width direction W of each end portion in the length direction L of the first outermost end surface internal electrode can be brought even closer to the first main surface AA, or each end portion in the width direction W of each end portion in the length direction L of the second outermost end surface internal electrode can be brought even closer to the second main surface AB. Therefore, it is possible to further reduce c1 through c4.

In addition, the present invention includes the following combinations.

<1> A multilayer ceramic capacitor includes: a multilayer body including a plurality of dielectric layers that are laminated, a plurality of internal electrodes each provided on a corresponding one of the plurality of dielectric layers, a first main surface and a second main surface opposed to each other in a lamination direction, a first lateral surface and a second lateral surface opposed to each other in a width direction orthogonal to the lamination direction, and a first end surface and a second end surface opposed to each other in a length direction orthogonal to the lamination direction and the width direction; end surface external electrodes provided in a pair, each on a corresponding one of the end surfaces; and lateral surface external electrodes provided in a pair on a corresponding one of the lateral surfaces. The plurality of internal electrodes include end surface internal electrodes each exposed at both the first end surface and the second end surface, and lateral surface internal electrodes each exposed at both the first lateral surface and the second lateral surface, and when a straight line extending parallel to the lamination direction and passing through a middle portion of the multilayer body in the length direction and a middle portion of the multilayer body in the width direction is defined as a reference line, an end surface internal electrode closest to the first main surface is defined as a first outermost end surface internal electrode, a distance between the first outermost end surface internal electrode and the first main surface on the reference line is defined as al, and a distance between one end portion among end portions in the width direction of the first outermost end surface internal electrode on the first end surface and the first main surface is defined as b1, b1 < a1 is satisfied.
<2> In the multilayer ceramic capacitor as described in <1> above, when a distance between a middle portion in the width direction of the first outermost end surface internal electrode on the first end surface and the first main surface is defined as c1, b1 ≤ c1 is satisfied.
<3> In the multilayer ceramic capacitor as described in <1> or <2> above, when an end surface internal electrode closest to the second main surface is defined as a second outermost end surface internal electrode, a distance between the second outermost end surface internal electrode and the second main surface on the reference line is defined as a2, and a distance between one end portion among end portions in the width direction of the second outermost end surface internal electrode on the first end surface and the second main surface is defined as b2, b2 < a2 is satisfied.
<4> In the multilayer ceramic capacitor as described in <3> above, when a distance between a middle portion in the width direction of the second outermost end surface internal electrode on the first end surface and the second main surface is defined as c2, b2 ≤ c2 is satisfied.
<5> In the multilayer ceramic capacitor as described in any one of <1> to <4> above, when a distance between one end portion among end portions in the width direction of the first outermost end surface internal electrode on the second end surface and the first main surface is defined as b3, b3 < a1 is satisfied.
<6> In the multilayer ceramic capacitor as described in <5> above, when a distance between a middle portion in the width direction of the first outermost end surface internal electrode on the second end surface and the first main surface is defined as c3, b3 ≤ c3 is satisfied.
<7> In the multilayer ceramic capacitor as described in any one of <1> to <6> above, when an end surface internal electrode closest to the second main surface is defined as a second outermost end surface internal electrode, a distance between the second outermost end surface internal electrode and the second main surface on the reference line is defined as a2, and a distance between one end portion among end portions in the width direction of the second outermost end surface internal electrode on the second end surface and the second main surface is defined as b4, b4 < a2 is satisfied.
<8> In the multilayer ceramic capacitor as described in <7> above, when a distance between a middle portion in the width direction of the second outermost end surface internal electrode on the second end surface and the second main surface is defined as c4, b4 ≤ c4 is satisfied.
<9> In the multilayer ceramic capacitor as described in any one of <1> to <8>, when a lateral surface internal electrode closest to the first main surface is defined as a first outermost lateral surface internal electrode, a distance between the first outermost lateral surface internal electrode and the first main surface on the reference line is defined as a3, and a distance between one end portion among end portions in the length direction of the first outermost lateral surface internal electrode on the first lateral surface and the first main surface is defined as b5, b5 < a3 is satisfied.
<10> In the multilayer ceramic capacitor as described in <9> above, when a distance between a middle portion in the length direction of the first outermost lateral surface internal electrode on the first lateral surface and the first main surface is defined as c5, b5 ≤ c5 is satisfied.
<11> In the multilayer ceramic capacitor as described in <9> or <10>, when a lateral surface internal electrode closest to the second main surface is defined as a second outermost lateral surface internal electrode, a distance between the second outermost lateral surface internal electrode and the second main surface on the reference line is defined as a4, and a distance between one end portion among end portions in the length direction of the second outermost lateral surface internal electrode on the first lateral surface and the second main surface is defined as b6, b6 < a4 is satisfied.
<12> In the multilayer ceramic capacitor as described in <11>, when a distance between a middle portion in the length direction of the second outermost lateral surface internal electrode on the first lateral surface and the second main surface is defined as c6, b6 ≤ c6 is satisfied.
<13> In the multilayer ceramic capacitor as described in any one of <9> to <12>, when a lateral surface internal electrode closest to the first main surface is defined as a first outermost lateral surface internal electrode, and a distance between one end portion among end portions in the length direction of the first outermost lateral surface internal electrode on the second lateral surface and the first main surface is defined as b7, b7 < a3 is satisfied.
<14> In the multilayer ceramic capacitor as described in <13>, when a distance between a middle portion in the length direction of the first outermost lateral surface internal electrode on the second lateral surface and the first main surface is defined as c7, d7 ≤ c7 is satisfied.
<15> In the multilayer ceramic capacitor as described in any one of <9> to <14>, when a lateral surface internal electrode closest to the second main surface is defined as a second outermost lateral surface internal electrode, a distance between the second outermost lateral surface internal electrode and the second main surface on the reference line is defined as a4, and a distance between one end portion among end portions in the length direction of the second outermost lateral surface internal electrode on the second lateral surface and the second main surface is defined as b8, b8 < a4 is satisfied.
<16> In the multilayer ceramic capacitor as described in <15> above, when a distance between a middle portion in the length direction of the second outermost lateral surface internal electrode on the second lateral surface and the second main surface is defined as c8, b8 ≤ c8 is satisfied.
<17> The multilayer ceramic capacitor as described in any one of <1> to <16> includes: a multilayer body including a plurality of dielectric layers that are laminated, a plurality of internal electrodes each provided on a corresponding one of the plurality of dielectric layers, a first main surface and a second main surface opposed to each other in a lamination direction, a first lateral surface and a second lateral surface opposed to each other in a width direction orthogonal to the lamination direction, and a first end surface and a second end surface opposed to each other in a length direction orthogonal to the lamination direction and the width direction; end surface external electrodes provided in a pair, each on a corresponding one of the end surfaces; and lateral surface external electrodes provided in a pair on a corresponding one of the lateral surfaces. The plurality of internal electrodes include end surface internal electrodes each exposed at both the first end surface and the second end surface, and lateral surface internal electrodes each exposed at both the first lateral surface and the second lateral surface, and when a straight line extending parallel to the lamination direction and passing through a middle portion of the multilayer body in the length direction and a middle portion of the multilayer body in the width direction is defined as a reference line, a lateral surface internal electrode closest to the first main surface is defined as a first outermost lateral surface internal electrode, a distance between the first outermost lateral surface internal electrode and the first main surface on the reference line is defined as a3, and a distance between one end portion among end portions in the length direction of the first outermost lateral surface internal electrode on the first lateral surface and the first main surface is defined as b5, b5 < a3 is satisfied.

### EXPLANATION OF REFERENCE NUMERALS

1, 100 multilayer ceramic capacitor
2, 102 multilayer body
14 dielectric layer
15 internal electrode
3 end surface external electrode
4 lateral surface external electrode
20, 120 end surface internal electrode
50, 150 lateral surface internal electrode
20A, 120A first outermost end surface internal electrode
20B, 120B second outermost end surface internal electrode
50A, 150A first outermost lateral surface internal electrode
50B, 150B second outermost lateral surface internal electrode
AA first main surface
AB second main surface
BA first lateral surface
BB second lateral surface
CA first end surface
CB second end surface
SL reference line

## Claims

1. A multilayer ceramic capacitor comprising:
a multilayer body including a plurality of dielectric layers that are laminated, a plurality of internal electrodes each provided on a corresponding one of the plurality of dielectric layers, a first main surface and a second main surface opposed to each other in a lamination direction, a first lateral surface and a second lateral surface opposed to each other in a width direction orthogonal to the lamination direction, and a first end surface and a second end surface opposed to each other in a length direction orthogonal to the lamination direction and the width direction;
end surface external electrodes provided in a pair, each on a corresponding one of the end surfaces; and
lateral surface external electrodes provided in a pair on a corresponding one of the lateral surfaces,
wherein
the plurality of internal electrodes include end surface internal electrodes each exposed at both the first end surface and the second end surface, and lateral surface internal electrodes each exposed at both the first lateral surface and the second lateral surface, and
when a straight line extending parallel to the lamination direction and passing through a middle portion of the multilayer body in the length direction and a middle portion of the multilayer body in the width direction is defined as a reference line,
an end surface internal electrode closest to the first main surface is defined as a first outermost end surface internal electrode,
a distance between the first outermost end surface internal electrode and the first main surface on the reference line is defined as a1, and
a distance between one end portion among end portions in the width direction of the first outermost end surface internal electrode on the first end surface and the first main surface is defined as b1,
b1 < a1 is satisfied.

2. The multilayer ceramic capacitor according to claim 1, wherein when a distance between a middle portion in the width direction of the first outermost end surface internal electrode on the first end surface and the first main surface is defined as c1, b1 ≤ c1 is satisfied.

3. The multilayer ceramic capacitor according to claim 1 or 2, wherein
when an end surface internal electrode closest to the second main surface is defined as a second outermost end surface internal electrode,
a distance between the second outermost end surface internal electrode and the second main surface on the reference line is defined as a2, and
a distance between one end portion among end portions in the width direction of the second outermost end surface internal electrode on the first end surface and the second main surface is defined as b2,
b2 < a2 is satisfied.

4. The multilayer ceramic capacitor according to claim 3, wherein when a distance between a middle portion in the width direction of the second outermost end surface internal electrode on the first end surface and the second main surface is defined as c2, b2 ≤ c2 is satisfied.

5. The multilayer ceramic capacitor according to any one of claims 1 to 4, wherein when a distance between one end portion among end portions in the width direction of the first outermost end surface internal electrode on the second end surface and the first main surface is defined as b3, b3 < a1 is satisfied.

6. The multilayer ceramic capacitor according to claim 5, wherein when a distance between a middle portion in the width direction of the first outermost end surface internal electrode on the second end surface and the first main surface is defined as c3, b3 ≤ c3 is satisfied.

7. The multilayer ceramic capacitor according to any one of claims 1 to 6, wherein
when an end surface internal electrode closest to the second main surface is defined as a second outermost end surface internal electrode,
a distance between the second outermost end surface internal electrode and the second main surface on the reference line is defined as a2, and
a distance between one end portion among end portions in the width direction of the second outermost end surface internal electrode on the second end surface and the second main surface is defined as b4,
b4 < a2 is satisfied.

8. The multilayer ceramic capacitor according to claim 7, wherein when a distance between a middle portion in the width direction of the second outermost end surface internal electrode on the second end surface and the second main surface is defined as c4, b4 ≤ c4 is satisfied.

9. The multilayer ceramic capacitor according to any one of claims 1 to 8, wherein
when a lateral surface internal electrode closest to the first main surface is defined as a first outermost lateral surface internal electrode,
a distance between the first outermost lateral surface internal electrode and the first main surface on the reference line is defined as a3, and
a distance between one end portion among end portions in the length direction of the first outermost lateral surface internal electrode on the first lateral surface and the first main surface is defined as b5,
b5 < a3 is satisfied.

10. The multilayer ceramic capacitor according to claim 9, wherein when a distance between a middle portion in the length direction of the first outermost lateral surface internal electrode on the first lateral surface and the first main surface is defined as c5, b5 ≤ c5 is satisfied.

11. The multilayer ceramic capacitor according to claim 9 or 10, wherein
when a lateral surface internal electrode closest to the second main surface is defined as a second outermost lateral surface internal electrode,
a distance between the second outermost lateral surface internal electrode and the second main surface on the reference line is defined as a4, and
a distance between one end portion among end portions in the length direction of the second outermost lateral surface internal electrode on the first lateral surface and the second main surface is defined as b6,
b6 < a4 is satisfied.

12. The multilayer ceramic capacitor according to claim 11, wherein when a distance between a middle portion in the length direction of the second outermost lateral surface internal electrode on the first lateral surface and the second main surface is defined as c6, b6 ≤ c6 is satisfied.

13. The multilayer ceramic capacitor according to any one of claims 9 to 12, wherein
when a lateral surface internal electrode closest to the first main surface is defined as a first outermost lateral surface internal electrode, and
a distance between one end portion among end portions in the length direction of the first outermost lateral surface internal electrode on the second lateral surface and the first main surface is defined as b7,
b7 < a3 is satisfied.

14. The multilayer ceramic capacitor according to claim 13, wherein when a distance between a middle portion in the length direction of the first outermost lateral surface internal electrode on the second lateral surface and the first main surface is defined as c7, d7 ≤ c7 is satisfied.

15. The multilayer ceramic capacitor according to any one of claims 9 to 14, wherein
when a lateral surface internal electrode closest to the second main surface is defined as a second outermost lateral surface internal electrode,
a distance between the second outermost lateral surface internal electrode and the second main surface on the reference line is defined as a4, and
a distance between one end portion among end portions in the length direction of the second outermost lateral surface internal electrode on the second lateral surface and the second main surface is defined as b8,
b8 < a4 is satisfied.

16. The multilayer ceramic capacitor according to claim 15, wherein when a distance between a middle portion in the length direction of the second outermost lateral surface internal electrode on the second lateral surface and the second main surface is defined as c8, b8 ≤ c8 is satisfied.

17. The multilayer ceramic capacitor according to any one of claims 1 to 16, comprising:
a multilayer body including a plurality of dielectric layers that are laminated, a plurality of internal electrodes each provided on a corresponding one of the plurality of dielectric layers, a first main surface and a second main surface opposed to each other in a lamination direction, a first lateral surface and a second lateral surface opposed to each other in a width direction orthogonal to the lamination direction, and a first end surface and a second end surface opposed to each other in a length direction orthogonal to the lamination direction and the width direction;
end surface external electrodes provided in a pair, each on a corresponding one of the end surfaces; and
lateral surface external electrodes provided in a pair on a corresponding one of the lateral surfaces,
wherein
the plurality of internal electrodes include end surface internal electrodes each exposed at both the first end surface and the second end surface, and lateral surface internal electrodes each exposed at both the first lateral surface and the second lateral surface, and
when a straight line extending parallel to the lamination direction and passing through a middle portion of the multilayer body in the length direction and a middle portion of the multilayer body in the width direction is defined as a reference line,
a lateral surface internal electrode closest to the first main surface is defined as a first outermost lateral surface internal electrode,
a distance between the first outermost lateral surface internal electrode and the first main surface on the reference line is defined as a3, and
a distance between one end portion among end portions in the length direction of the first outermost lateral surface internal electrode on the first lateral surface and the first main surface is defined as b5,
b5 < a3 is satisfied.
